# EUROPEAN PATENT SPECIFICATION

(11) **EP 3 069 615 B1**
(45) Date of publication and mention of the grant of the patent: **30.05.2018**
(21) Application number: 14861703.8
(22) Date of filing: 07.11.2014
(51) Int. Cl.: A23D 7/00, A23D 9/00, A23G 1/00, A23G 1/30, A23L 27/60, C11B 5/00

(54) **FAT CONTAINING POLYUNSATURATED FATTY ACID**
FETT MIT MEHRFACH UNGESÄTTIGTEN FETTSÄUREN
MATIÈRE GRASSE CONTENANT UN ACIDE GRAS POLYINSATURÉ

(30) Priority: 13.11.2013 JP 2013235326; 13.11.2013 JP 2013235327
(43) Date of publication of application: 21.09.2016
(60) Divisional application: 18168192.5
(73) Proprietor: Fuji Oil Holdings Inc., Osaka 598-8540 (JP)
(72) Inventor: KATO, Masaharu, Tsukubamirai-shi Ibaraki 300-2436 (JP); KOJIMA, Makiko, Tsukubamirai-shi Ibaraki 300-2436 (JP); MORIKAWA, Miwako, Tsukubamirai-shi Ibaraki 300-2436 (JP); INOUE, Tomomi, Izumisano-shi Osaka 598-8540 (JP); WATANABE, Shimpei, Izumisano-shi Osaka 598-8540 (JP)
(74) Representative: Boult Wade Tennant
(86) International application number: PCT/JP2014/079566
(87) International publication number: WO 2015/072406

(56) References cited:
- WO-A1-94/22321
- WO-A1-2010/033034
- WO-A1-2013/172348
- GB-A- 2 428 682
- JP-A- S63 135 483
- JP-A- 2001 218 558
- JP-A- 2004 267 153
- JP-A- 2009 106 187
- JP-A- 2010 041 965
- JP-A- 2013 159 730
- YASUYUKI IGAWA: 'Features Natural Component on Food Preservation. Conservation of Food Quality by the Green Tea Extract' FOOD CHEMICALS vol. 14, no. 9, 1998, pages 38 - 45, XP008183578

## Description

### Technical Field

The present invention relates to a method for producing a polyunsaturated fatty acid-containing fat. More particularly, the present invention relates to a method for producing a polyunsaturated fatty acid-containing fat which has realized an improvement in oxidation stability required for a food containing a polyunsaturated fatty acid-containing fat.

### Background Art

In recent years, effectiveness of n-3 fatty acid serving as an essential fatty acid for health has been widely known, and a demand therefor has been increased. Examples of the n-3 fatty acid include α linolenic acid (C18:3), docosahexaenoic acid (DHA; C22:6), eicosapentaenoic acid (EPA; C20:5), and docosapentaenoic acid (DPA; C22:5).

Since the n-3 fatty acid contains many double bonds in the constituent fatty acids, a fat containing n-3 fatty acid has poor stability, and deteriorates its taste quickly. Care such as preservation at a low temperature or under light shielding is needed, and for this reason, intended use as a general edible fat is limited, and a fat containing a large amount of n-3 fatty acid and having high stability has been demanded.

In addition, a polyunsaturated acid-containing fat has very poor oxidation stability as compared with an edible fat such as soybean oil and rapeseed oil, easily undergoes oxidation by oxygen, light, heat etc. When it is oxidized, it generates an off-taste and off-flavor, or it produces a peroxide which concerns to give an adverse influence on health. In order to utilize such a polyunsaturated acid-containing fat which is remarkably inferior in oxidation stability, various methods aiming at blocking contact with oxygen in the air have been disclosed. Patent Documents 1 to 8 disclose a method of formulation of a polyunsaturated acid-containing fat into an emulsion, and Patent Documents 9 and 10 disclose a method of powderization or capsulation of a polyunsaturated acid-containing fat. When a polyunsaturated acid-containing fat is formulated into an emulsion, the emulsion becomes cloudy into a translucent state, or contains water, and therefore, intended use thereof is limited. In addition, even when such a fat is subjected to powderization or capsulation, there is a problem that intended use thereof is limited, likewise the emulsion. In view of such a technical background, utilization of the conventional polyunsaturated fatty acid-containing fat has been limited only to an application range such as health foods encapsulated, canned foods, etc. However, the manufacturing operation is troublesome and the productivity is lowered; and in capsulated products, oxidization has already progressed in steps, and the majority of fats inside the capsule have an oxidative rancidity. Also, there is a problem that in order to prevent the capsule during preservation from being destructed, the kind of the capsule which is usable in foods and feedstuffs is limited.

Patent Document 11 discloses a method of mixing a fat containing DHA inferior in oxidation stability at 30% or more with another fat to utilize the mixture as an edible fat composition for cooking with heat. However, in such a method, a blending amount of DHA is extremely as small as 0.01 to 0.5%, and it is far from taking an amount which is said to be effective for health.

It is known that a refined polyunsaturated fatty acid-containing fat has no odor and does not contain peroxide, but when oxidation occurs, the reaction progresses likewise a chain reaction, and generation of deteriorated smell or peroxide occurs quickly. For example, after a polyunsaturated fatty acid-containing fat is used in a factory, it is necessary that the fat is poured into a can, that the can containing the fat is filled with nitrogen gas, and that the can is tightly closed; that is, a variety of considerations are necessary for handling fat, and intended use thereof itself has limitation. Many attempts have been made for stabilizing a polyunsaturated fatty acid-containing fat by addition of a variety of antioxidants or a mixture thereof, but they have not reached sufficient outcome at this stage. Contrary to a demand from the markets, it cannot be said that development of foods containing a polyunsaturated fatty acid-containing fat has sufficiently progressed.

Heretofore, in order to improve oxidation stability of an edible fat, addition of an antioxidant has been generally performed. Specifically, utilization of tocopherol serving as a lipid-soluble antioxidant, or ascorbyl palmitate has been studied. For example, Patent Document 2 discloses a method of emulsifying an aqueous ascorbic acid solution for addition, Patent Document 12 discloses a method of adding tocopherol, ascorbic acid and tea extract, and Patent Document 13 discloses a method of adding ascorbic acid or a salt thereof and another organic acid or a salt thereof; but those methods are not satisfactory as a method of improving oxidation stability of a polyunsaturated fatty acid-containing fat, and a further excellent oxidation preventing method is demanded.

Patent Document 13 discloses a water-in-oil lipophilic antioxidant obtained by emulsifying 100 parts by weight of aqueous solution containing one or two or more of water-soluble antioxidative substances, if necessary with synergist, and 1 to 500 parts by weight of one or two or more of lipophilic emulsifiers.

Patent Document 14 discloses a lipophilic formulation of oil-solubilized water-soluble compound. The formulation is obtained by dissolving water-soluble compound other than catechin and an emulsifier having 6 to 14 of HLB into water or alcohol, then adding polyglycerol condensed ricinoleic acid ester to obtain a water-in-polyglycerol condensed ricinoleic acid ester emulsion liquid, and then adding and sufficiently mixing 0.5 to 30 parts by weight of enzyme-decomposed lecithin to the emulsion liquid.

Patent Document 15 discloses an antioxidant composition having good solubility into fat obtained by dissolving poorly oil-soluble antioxidative substance such as ascorbic acid, erythorbic acid, kojic acid, gallic acid and malic acid into lower alkyl alcohol such as ethanol, then into organic acid monoglyceride such as citric acid monoglyceride, and then dissolving the obtained mixture solution into polyglycerol condensed ricinoleic acid ester.

Patent Document 16 discloses a method for producing a catechin-dispersed fat including adding green tea-derived hexane solubles and catechin to a fat, heating the mixture at 70 to 130°C, and grinding the resultant.

Meanwhile, food additive manufacturers have studied improvement in solubility of a water-soluble antioxidant substance in an oil by employing a large amount of emulsifier, and there are relevant products. However, when a large amount of emulsifier is blended, this adversely influences on taste and is not preferable, and a problem of generation of an off-taste and off-flavor or production of lipid peroxide due to oxidization has not been solved yet.

As a method of improving oxidation stability of a polyunsaturated fatty acid-containing fat, Patent Document 17 discloses a method including treating a fish oil with silica gel; deodorizing the oil with water steam under vacuum in the presence of a rosemary or sage extract; and adding ascorbyl palmitate or mixed tocopherol thereto. This overcomes a problem of an aroma peculiar to rosemary or sage, and proposes a fat having high oxidation stability. However, oxidation stability of a polyunsaturated fatty acid obtained by this method is merely at best such that rancidity stability at 100°C increases about three times by blending of an antioxidant at 3000 ppm, and oxidation stability is still low. Patent Document 18 discloses a method of adding catechin before purification, but also in this method, it cannot be said that improvement in oxidation stability shown by the degree of suppression of an increase in peroxide value is sufficient.

As a method of reducing an odor, Patent Document 19 has proposed a method of adding a milk-based flavor, and Patent Document 20 has proposed a method of masking a fish smell by adding a ginger flavor, but since oxidation of a fat generates a peroxide which is harmful to the human body, masking treatment which does not suppress oxidation has not led to drastic solution of the problem.

### Prior Art Document

### Patent Documents

Patent Document 1: JP 2011-255373 A
Patent Document 2: JP H07-107938 A
Patent Document 3: JP 2005-529728 A
Patent Document 4: JP H07-313055 A
Patent Document 5: JP H08-154576 A
Patent Document 6: JP H08-205771 A
Patent Document 7: JP H08-154577 A
Patent Document 8: JP H06-49479 A
Patent Document 9: JP H07-305088 A
Patent Document 10: JP H09-87656 A
Patent Document 11: JP 2013-81477 A
Patent Document 12: JP H09-111237 A
Patent Document 13: JP S63-135483 A
Patent Document 14: JP H06-254378 A
Patent Document 15: JP 2001-131572 A
Patent Document 16: JP 2010-41965 A
Patent Document 17: JP 2000-144168 A
Patent Document 18: JP 2005-124439 A
Patent Document 19: JP H06-68 A
Patent Document 20: JP H06-189717 A

### Summary of Invention

### Problems to be Solved by Invention

As described above, a polyunsaturated fatty acid-containing fat is a material which draws attention from effectiveness of a polyunsaturated fatty acid on the human body, but since oxidation stability is inferior as compared with the conventional edible fat, there is a problem that usage applications are limited.

In order to respond to the above-mentioned demand, an object of the present invention is to sufficiently suppress oxidation of a polyunsaturated fatty acid-containing fat, to provide a polyunsaturated fatty acid-containing fat which is good in taste and is distributable in the markets in the form of a liquid like an ordinary edible oil such as soybean oil or rapeseed oil, and to extend intended use to foods fields.

It is important to obtain a good taste, as well as, to improve oxidation stability, in foods containing a polyunsaturated fatty acid-containing fat. A method of improving oxidation stability of a fat has also been disclosed, but as described above, in Patent Documents 13 to 15, there is a problem that a taste is not preferable, probably because addition of a relatively large amount of an emulsifier is essential in order to make a water-soluble antioxidant substance oil-soluble. In addition, the method disclosed in Patent Document 16 does not include an emulsifier, but includes green tea-derived hexane solubles, as well as catechin. Since the green tea-derived hexane solubles contain ingredients of bitterness and astringency, this is not suitable in the case of addition of a large amount of catechin.

An object of the present invention is to provide a polyunsaturated fatty acid-containing fat high in versatility having excellent oxidation stability and a good taste by dispersing a water-soluble tea polyphenol in a polyunsaturated fatty acid-containing fat with an easy method.

### Means for Solving the Problems

In order to solve the aforementioned problems, the present inventors have intensively studied. As a result, they found out that a polyunsaturated fatty acid-containing fat which has excellent oxidation stability and a good taste is obtained by adding a water-soluble tea polyphenol originally hard to be soluble in a fat to a fat while the water-soluble tea polyphenol is in a solution state by using an aqueous medium. The present invention has been completed on the basis of these findings.

That is, the present disclosure includes:
(1) a polyunsaturated fatty acid-containing fat including α linolenic acid or a fatty acid having five or more double bonds in a constituent fatty acid composition, where the fat includes a water-soluble tea polyphenol which has been added in a state of being dissolved in an aqueous solution,
(2) a polyunsaturated fatty acid-containing edible vegetable fat including the polyunsaturated fatty acid-containing fat according to (1), where the polyunsaturated fatty acid-containing fat includes 30% by weight to 80% by weight of α linolenic acid in a constituent fatty acid composition, where a content of a water-soluble tea polyphenol is 150 ppm by weight to 4000 ppm by weight and a content of an emulsifier is 150 ppm by weight to 4000 ppm by weight based on the polyunsaturated fatty acid-containing edible vegetable fat, where the content of the emulsifier in the fat is 1.5 times or less than the content of the water-soluble tea polyphenol, and where a P/S value obtained by a method below is 0.8 or more,
   P: CDM stability time of the polyunsaturated fatty acid-containing edible vegetable fat containing 150 ppm by weight to 4000 ppm by weight of the water-soluble tea polyphenol,
   S: CDM stability time of refined soybean oil to which no antioxidant substance is added,
(3) the polyunsaturated fatty acid-containing edible vegetable fat according to (2), where the content of the water-soluble tea polyphenol is 250 ppm by weight to 2500 ppm by weight and the content of the emulsifier is 250 ppm by weight to 2500 ppm by weight based on the polyunsaturated fatty acid-containing edible vegetable fat, where the content of the emulsifier in the fat is 1.2 times or less than the content of the water-soluble tea polyphenol, and where a P/S value obtained by a method below is 1.0 or more,
   P: CDM stability time of the polyunsaturated fatty acid-containing edible vegetable fat containing 250 ppm by weight to 2000 ppm by weight of the water-soluble tea polyphenol,
   S: CDM stability time of refined soybean oil to which no antioxidant substance is added,
(4) the polyunsaturated fatty acid-containing edible vegetable fat according to (2) or (3), where the emulsifier is polyglycerol-condensed ricinoleic acid ester,
(5) a powdery fat including 10% or more of the polyunsaturated fatty acid-containing edible vegetable fat according to any one of (2) to (4),
(6) a food including the polyunsaturated fatty acid-containing edible vegetable fat according to any one of (2) to (5),
(7) the food according to (6), where a content of the water-soluble tea polyphenol in a whole oil is 30 ppm by weight to 3000 ppm by weight,
(8) a method for producing the polyunsaturated fatty acid-containing edible vegetable fat according to any one of (2) to (4), including adding a water-soluble tea polyphenol to an aqueous medium, and adding the water-soluble tea polyphenol in a solution state to a fat,
(9) the method for producing the polyunsaturated fatty acid-containing edible vegetable fat according to (8), including adding a water-soluble tea polyphenol to an aqueous medium, and adding the water-soluble tea polyphenol in a solution state to a fat, and then removing the water under reduced pressure,
(10) a highly polyunsaturated fatty acid-containing fat for distribution in a form of a liquid including the polyunsaturated fatty acid-containing fat according to (1) including 1% by weight to 50% by weight of a fatty acid having five or more double bonds in a constituent fatty acid composition, where the highly polyunsaturated fatty acid-containing fat satisfies (A) and (B) below, and has characteristics of (C) to (E) below, where
   (A) a content of the water-soluble tea polyphenol is 500 to 10000 ppm by weight, a content of the emulsifier is 20000 ppm by weight or less, and the content of the emulsifier is two times or less than the content of the water-soluble tea polyphenol;
   (B) a value obtained by aroma ingredient analysis of the fat after preservation at 60°C for 3 days and obtained by dividing an average area of peaks of nine aroma ingredients which are shown by (α) below and which influence a taste of the highly polyunsaturated fatty acid-containing fat by an average area of peaks of two aroma ingredients shown by (β) below is 7 or less,
      nine aroma ingredients (α); 2-Heptenal, 2,4-Nonadienal, 2,4-Heptadienal, 3,5-Octadien-2-one, 2-Butenal, 3,4-Pentadienal, 2,2-dimethyl, 1-Penten-3-one, 2,4-Hexadienal, 2(5H)-Furanone, 5-ethyl,
      two aroma ingredients (β); Phenol and Toluene;
   (C) the fat forms a continuous phase;
   (D) a water content is 5% by weight or less; and
   (E) A/S obtained by a method below is 0.8 or more,
      A: CDM stability time at 100°C of the highly polyunsaturated fatty acid-containing fat containing 500 to 10000 ppm by weight of the water-soluble tea polyphenol,
      S: CDM stability time at 100°C of refined soybean oil to which no antioxidant substance is added,
(11) the highly polyunsaturated fatty acid-containing fat for distribution in a form of a liquid according to (10), where 5% by weight to 50% by weight of the fatty acid having five or more double bonds is contained in the constituent fatty acid composition,
(12) the highly polyunsaturated fatty acid-containing fat for distribution in a form of a liquid according to (10) or (11), where the content of the water-soluble polyphenol is 500 to 10000 ppm by weight, where the content of the emulsifier is 400 to 6000 ppm by weight, and where the content of the emulsifier is two times or less than the content of the tea polyphenol,
(13) the highly polyunsaturated fatty acid-containing fat for distribution in a form of a liquid according to (10), wherein (B) in (10) is obtained by using GC-TOFMS,
(14) the highly polyunsaturated fatty acid-containing fat for distribution in a form of a liquid according to any one of (10) to (13), where (D) the water content in (10) is 2% by weight or less,
(15) a food including the highly polyunsaturated fatty acid-containing fat for distribution in a form of a liquid according to any one of (10) to (14),
(16) the food according to (15), where the food including the highly polyunsaturated fatty acid-containing fat for distribution in a form of a liquid is dressing,
(17) the food according to (15), where the food including the highly polyunsaturated fatty acid-containing fat for distribution in a form of a liquid is chocolate,
(18) the food according to (15), where the food including the highly polyunsaturated fatty acid-containing fat for distribution in a form of a liquid is shortening,
(19) the food according to (15), where the food including the highly polyunsaturated fatty acid-containing fat for distribution in a form of a liquid is blended into mayonnaise,
(20) the food according to (15), where the food including the highly polyunsaturated fatty acid-containing fat for distribution in a form of a liquid is blended into margarine,
(21) a method for suppressing generation of aroma ingredients of a food, including using the highly polyunsaturated fatty acid-containing fat for distribution in a form of a liquid according to any one of (10) to (14),
(22) a method for producing the highly polyunsaturated fatty acid-containing fat for distribution in a form of a liquid according to any one of (10) to (14), including adding a water-soluble tea polyphenol to an aqueous medium, and adding the water-soluble tea polyphenol in a solution state to a fat.

### Effect of the Invention

The present invention enables to obtain a polyunsaturated fatty acid-containing fat which is improved in oxidation stability by an easy method, and has a good taste.

In addition, the polyunsaturated fatty acid-containing edible vegetable fat, as one aspect of the present invention, containing 30% by weight to 80% by weight of α linolenic acid in a constituent fatty acid composition enables to obtain a polyunsaturated fatty acid-containing edible vegetable fat which is improved in oxidation stability by an easy method and has a good taste, and enables to provide a food which has high health superiority, excellent oxidation stability, and a good taste by utilizing the polyunsaturated fatty acid-containing edible vegetable fat of the present invention. In addition, the polyunsaturated fatty acid-containing edible vegetable fat of the present invention may be used in intended use other than food use. Specifically, the fat may be utilized in medicaments, cosmetics, pet foods, and quasi-drugs, and for such intended use, and enables to provide a polyunsaturated fatty acid having high health superiority, without generating an oxidized oil odor and a peroxide which adversely influences on health over a long period of time.

Also, a highly polyunsaturated fatty acid-containing fat, as another aspect of the present disclosure, containing a highly polyunsaturated fatty acid-containing fat containing a fatty acid having five or more double bonds in a constituent fatty acid composition, and a specified amount of a water-soluble tea polyphenol, and having predetermined aroma ingredient analysis values enables to obtain a highly polyunsaturated fatty acid-containing fat which is improved in oxidation stability, has a good taste, and is distributable in the form of a liquid. In addition, the highly polyunsaturated fatty acid-containing fat of the present invention has a feature that it has oxidation stability equal to that of soybean oil, and by utilizing the highly polyunsaturated fatty acid-containing fat of the present invention, a polyunsaturated fatty acid having high health superiority may be used in foods, without generating an oxidized oil odor and a peroxide which adversely influences on health over a long period of time. In addition, the highly polyunsaturated fatty acid-containing fat of the present disclosure may be used without being limited to its intended use range in a liquid state. Specifically, it is possible to obtain an emulsion by using the highly polyunsaturated fatty acid-containing fat of the present invention, to process the fat into a powder or a capsule, or the like; and the present disclosure may be utilized in wider intended use, including the utilization range of the previous highly polyunsaturated fatty acid-containing fat. In addition, the highly polyunsaturated fatty acid-containing fat of the present disclosure shows more excellent oxidation stability improving effect may be obtained as compared with the case where TBHQ (tertiary butylhydroquinone), which has not been approved as a food additive in Japan, having a high oxidation stability improving effect is added at the maximum value (200 ppm) approved in USA.

### Mode for Carrying Out the Invention

The kind of a fat which may be used in the present disclosure is not particularly limited, as long as the fat is edible, and examples thereof include all fats such as fish oil, animal fat, vegetable fat, and microorganism-produced fat, and at least one kind may be used.

In the present disclosure, a water-soluble tea polyphenol is used. Oil-soluble antioxidant such as tocopherol; water-soluble polyphenol such as rosemary extract and candleberry extract; and water-soluble antioxidant substance such as ascorbic acid, may be used in combination with the water-soluble tea polyphenol in such a range that the desired function of the present invention as well as taste and oxidation stability are not deteriorated.

The water-soluble tea polyphenol used in the present disclosure is preferably a water-soluble tea polyphenol containing no oil-soluble fraction in a tea extract. This is because the oil-soluble fraction in the tea extract contains ingredients of bitterness and astringency. An example of a preferable method of obtaining the water-soluble tea polyphenol containing no oil-soluble fraction may include a method of extraction from tea leaves by using an aqueous medium such as hot water or alcohol. A more preferable example thereof may include aqueous solution extraction. By performing extraction not using an organic solvent but using an aqueous solution, a water-soluble tea polyphenol containing almost no oil-soluble fraction may be obtained. It is known that a water-soluble tea polyphenol contains catechins as a main ingredient, and as representative catechins, eight kinds of catechins are present. Examples of gallate catechin include epigallocatechin gallate, epicatechin gallate, catechin gallate, and gallocatechin gallate. Examples of free catechin include epigallocatechin, epicatechin, catechin and gallocatechin. The water-soluble tea polyphenol also includes oxidized polyphenols which are generated from the fermentation state of tea leaves, in addition to the catechins. In the present disclosure, it is preferable to use a water-soluble tea polyphenol containing one or more kinds of the catechins or polyphenols. Further preferably, a commercially available water-soluble tea polyphenol-containing composition in which the concentration of polyphenol has been adjusted in a certain range is used. And, most preferably, a water-soluble product which has not been adjusted with an emulsifier etc. is used. Examples of a preferable water-soluble tea polyphenol-containing composition include product name: Sunphenon, manufactured by Taiyo Kagaku Co., Ltd.; and product name: Sunfood, manufactured by Mitsubishi-Kagaku Foods Corporation. Since the composition may be effectively dispersed in a fat at a high concentration, it is better as a content of polyphenol in the water-soluble tea polyphenol-containing composition is higher, and it is preferable that the water-soluble tea polyphenol-containing composition contains 50% or more of the water-soluble tea polyphenol.

CDM (Conductmetric Determination Method) stability is a value showing an oxidation stability of fat. As used herein, a value obtained from CDM stability test is an index of evaluation of oxidation stability as "CDM stability time". Longer CDM stability time shows more excellent oxidation stability. As used herein, a method for testing CDM stability is based on the method of the JOCS Standard Methods for the Analysis of Fats and Oils 2.5.1.2-1996. More specifically, fat is put into a reaction vessel and clean air is fed into the vessel while heating at 120°C. Then, volatile decomposition product generated by oxidation is collected in water and conductivity of the water is measured continuously. Time to inflection point in which the value of conductivity changes rapidly shows the "CDM stability time".

The emulsifier which may be used in the polyunsaturated fatty acid-containing fat of the present disclosure is not particularly limited, as long as it is an emulsifier having W/O type emulsifying activity, and polyglycerol fatty acid ester, sucrose fatty acid ester, sorbitan fatty acid ester etc. may be used. Polyglycerol-condensed ricinoleic acid ester may be used as a preferable emulsifier. Examples of the emulsifier include commercially available Poem PR-100 and Poem PR-300 manufactured by Riken Vitamin Co., Ltd., SY Glyster CRS-75, and SY Glyster CR-ED manufactured by Sakamoto Yakuhin Kogyo Co., Ltd., and Sunsoft 818H manufactured by Taiyo Kagaku Co., Ltd.

### (1) Polyunsaturated fatty acid-containing edible vegetable fat

One example of the polyunsaturated fatty acid-containing fat is a polyunsaturated fatty acid-containing edible vegetable fat, and any fats may be used regardless of their type as long as the fat contains 30% by weight to 80% by weight of α linolenic acid in a constituent fatty acid composition. Examples of such fats include linseed oil, perilla oil (shiso oil), lallemantia oil, basil seed oil, sweet rocket oil, and camelina oil. And, a preferable fat in view of a supply amount is linseed oil or perilla oil (shiso oil).

In the polyunsaturated fatty acid-containing edible vegetable fat of the present disclosure, the content of a water-soluble tea polyphenol is preferably 150 ppm by weight to 4000 ppm by weight, and more preferably 250 ppm by weight to 2500 ppm by weight. If the content of the water-soluble tea polyphenol in the polyunsaturated fatty acid-containing edible vegetable fat is less than 150 ppm by weight, a sufficient oxidation stability improving effect may not be obtained in some cases, and if the content exceeds 4000 ppm by weight, this content may be inefficient in some cases in comparison with the resulting effect, and therefore, it is not preferable.

In the polyunsaturated fatty acid-containing edible vegetable fat of the present disclosure, the content of an emulsifier is preferably 150 ppm by weight to 4000 ppm by weight, and more preferably 250 ppm by weight to 2500 ppm by weight. In addition, the content of the emulsifier in the fat is preferably 1.5 times or less, and more preferably 1.2 times or less than the content of the water-soluble tea polyphenol. If the content of the emulsifier in the polyunsaturated fatty acid-containing edible vegetable fat is less than 150 ppm by weight, 150 ppm by weight to 4000 ppm by weight of the water-soluble tea polyphenol may not be uniformly dispersed in the fat in some cases, and if the content of the emulsifier exceeds 1.5 times the content of the water-soluble tea polyphenol, this content may be inefficient in some cases in comparison with the resulting effect, and therefore, it is not preferable. In addition, an undesirable taste derived from the emulsifier may be felt in some times, and therefore, it is not preferable. From the viewpoint of a taste required for the polyunsaturated fatty acid-containing edible vegetable fat, the content of the emulsifier is further preferably 4000 ppm or less, and most preferably 25000 ppm or less.

The polyunsaturated fatty acid-containing edible vegetable fat of the present disclosure has a P/S value obtained by the following method of preferably 0.8 or more, and more preferably 1.0 or more:
P: CDM stability time of the polyunsaturated fatty acid-containing edible vegetable fat,
S: CDM stability time of refined soybean oil to which no antioxidant substance is added.

The content of the water-soluble tea polyphenol in the whole oil of a food containing the polyunsaturated fatty acid-containing edible vegetable fat is preferably 30 ppm by weight to 3000 ppm by weight, and more preferably 30 ppm by weight to 1000 ppm by weight.

A method of obtaining the polyunsaturated fatty acid-containing edible vegetable fat of the present disclosure is not particularly limited, as long as the water-soluble tea polyphenol can be dispersed in the fat. For obtaining the polyunsaturated fatty acid-containing edible vegetable fat containing the water-soluble tea polyphenol, for example, an aqueous solution dissolving 1% by weight of a water-soluble tea polyphenol-containing composition is prepared; a predetermined amount of the solution is added into the fat; and then, the mixture is treated for 15 minutes to 1 hour while stirring under reduced pressure conditions of 50 to 180°C and 0.5 to 100 torr to perform sufficient dehydration to obtain an edible fat containing water-soluble tea polyphenol. The concentration of the aqueous solution of the water-soluble tea polyphenol-containing composition is preferably 0.1 to 60% by weight, and further preferably 1 to 50% by weight. If the concentration is less than 0.1% by weight, when such an aqueous solution is added to the fat, the amount of water relative to the fat becomes too much, and a long time is needed for removing water, and therefore, it is not preferable. In addition, if the concentration exceeds 60% by weight, the water-soluble tea polyphenol contained in the water-soluble tea polyphenol-containing composition is precipitated, and the content of the water-soluble tea polyphenol in the fat is reduced, and therefore, it is not preferable. The temperature is preferably 50 to 180°C, and if the temperature is lower than 50°C, a long time is needed for removing water, and therefore, it is not preferable. In the reduced pressure conditions, 0.5 to 100 torr is preferable, and the pressure is preferably low as much as possible.

If necessary, additives which are used in edible fats, such as taste, coloring agent, and silicone may be used in the polyunsaturated fatty acid-containing edible vegetable fat of the present disclosure, in addition to the water-soluble tea polyphenol.

The polyunsaturated fatty acid-containing edible vegetable fat in the present disclosure may be subjected to powderization by a known method. Examples of the method for powderization include, but not particularly limited to, a spray cooling method of spraying a dissolved fat into a cooling tower (chiller), followed by powderization; a drum flake method of flowing a dissolved fat on a cooled drum, solidifying the fat, and scraping the resultant; and a spray drying method of spraying and drying an oil-in-water type emulsion with a spray dryer.

The method of powderization of the polyunsaturated fatty acid-containing vegetable fat in the present disclosure is, for example, as follows: 95 parts by weight of an extremely hardened oil of refined palm oil which has been warmed to 70°C for complete melt is mixed with 5 parts of the polyunsaturated fatty acid-containing edible vegetable fat of the present disclosure; the mixture is stirred well and flown on a cooled drum; the solidified fat obtained is scraped, ground, and thereafter, passed through a 10 mesh sieve to obtain a powdery fat. Alternatively, a polyunsaturated fatty acid-containing edible vegetable fat dissolving emulsifier such as lecithin and glycerol fatty and acid ester, or a fat obtained by mixing a polyunsaturated fatty acid-containing edible vegetable fat with another edible fat is mixed with an aqueous phase dissolving a protein such as sodium caseinate and a saccharide such as dextrin; an oil-in-water emulsion is prepared by using an emulsifying device such as a homogenizer; and spray drying is performed with a spray dryer to obtain a powder product of the polyunsaturated fatty acid-containing vegetable fat.

The polyunsaturated fatty acid-containing edible vegetable fat of the present disclosure may be used in various foods in which the conventional polyunsaturated fatty acid-containing edible vegetable fat is hardly used. Examples of preferable intended use include mayonnaise, dressing, margarine, shortening, cream, chocolate, frying oil, spray oil, frozen dessert, baked confectionery (cookie, cracker, food bar), capsule, powder, and other fat-processed foods. From the viewpoint of effective intake of α linolenic acid, examples of more preferable intended use include mayonnaise, dressing, margarine, shortening, cream, sand cream, chocolate, frozen dessert, baked confectionery (cookie, cracker, food bar), and capsule. It is preferable that 5% or more of the polyunsaturated fatty acid-containing edible vegetable fat of the present disclosure is contained in a fat of foods. Alternatively, the polyunsaturated fatty acid-containing edible vegetable fat may be used in a fat in a mixed feed, or a powdery product of the polyunsaturated fatty acid-containing edible vegetable fat may be mixed into a mixed feed. It is preferable that 5% or more of the polyunsaturated fatty acid-containing edible vegetable fat of the present disclosure is contained in a fat of a feed.

### (2) Highly polyunsaturated fatty acid-containing fat

Another example of the polyunsaturated fatty acid-containing fat includes a highly polyunsaturated fatty acid-containing fat, and in the highly polyunsaturated fatty acid-containing fat, the amount of a fatty acid having five or more double bonds may be 1% by weight to 50% weight in a constituent fatty acid composition. The fatty acid having five or more double bonds is not particularly limited, and examples thereof include docosahexaenoic acid (DHA; C22:6), eicosapentaenoic acid (EPA; C20:5), and docosapentaenoic acid (DPA; C22:5). The highly polyunsaturated fatty acid-containing fat of the present invention has a water content of preferably 5% by weight or less, and more preferably 2% by weight or less, and has a feature that it is a highly polyunsaturated fatty acid-containing fat which is liquid likewise an ordinary edible oil such as soybean oil and rapeseed oil even when it is not an emulsified product, and which may be distributed at normal temperature.

The highly polyunsaturated fatty acid-containing fat of the present disclosure contains a water-soluble tea polyphenol preferably in an amount of 500 ppm by weight to 10000 ppm by weight relative to the whole amount of the fat. The content is more preferably 500 ppm by weight to 8000 ppm by weight, further preferably 500 ppm by weight to 7000 ppm by weight from the viewpoint of obtaining a taste suitable for foods, most preferably 600 ppm by weight to 5000 ppm by weight. If the content is less than 500 ppm by weight, a sufficient oxidation stability improving effect may not be obtained in some cases. On the other hand, when the content exceeds 10000 ppm by weight, the taste and color tone of the tea polyphenol may be intense in some cases, and therefore, it is not preferable to be used in foods.

The highly polyunsaturated fatty acid-containing fat of the present invention has an A/S value, obtained by a method below, of preferably 0.8 or more, more preferably 1.0 or more, and further preferably 1.2 or more:
A: CDM stability time at 100°C of the highly polyunsaturated fatty acid-containing fat,
S: CDM stability time at 100°C of refined soybean oil to which no antioxidant substance is added.

The content of an emulsifier in the highly polyunsaturated fatty acid-containing fat of the present disclosure is preferably 20000 ppm by weight or less, and is two times or less , more preferably 1.5 times or less, and further preferably 1.0 time or less than the content of the water-soluble tea polyphenol. In addition, the content of the emulsifier is preferably 250 to 20000 ppm by weight, more preferably 250 to 16000 ppm by weight, and further preferably 400 to 6000 ppm by weight. If the content of the emulsifier exceeds two times the content of the water-soluble tea polyphenol, an undesirable taste derived from the emulsifier may be felt in some times, and a originally good taste of foods is not obtained.

A method of obtaining the highly polyunsaturated fatty acid-containing fat of the present disclosure is not particularly limited, as long as the water-soluble tea polyphenol may be dispersed in the fat. For example, a method including dissolving a water-soluble tea polyphenol-containing composition to prepare an aqueous solution; and adding a predetermined amount of the aqueous solution into a fat, followed by stirring may be performed for obtaining the highly polyunsaturated fatty acid-containing fat containing water-soluble tea polyphenol.

An organic compound which raises a problem of oxidization is subjected to identification and quantification, and a method of preparing a highly polyunsaturated fatty acid-containing fat which is used in the same manner as an ordinary edible fat and has little oxidative rancidity is studied. A preferable aspect of the highly polyunsaturated fatty acid-containing fat of the present disclosure is obtained by setting a value to 7 or less, preferably 5 or less, more preferably 3 or less, further preferably 2 or less, and most preferably 1.5 or less, the value being obtained by aroma ingredient analysis of the fat after preservation at 60°C for 3 days and obtained by dividing an average amount of nine aroma ingredients (2-Heptenal, 2,4-Nonadienal, 2,4-Heptadienal, 3,5-Octadien-2-one, 2-Butenal, 3,4-Pentadienal, 2,2-dimethyl, 1-Penten-3-one, 2,4-Hexadienal, 2(5H)-Furanone, 5-ethyl) which influence a taste of the highly polyunsaturated fatty acid-containing fat by an average amount of two aroma ingredients (Phenol and Toluene). When the value exceeds 7, an off-flavor becomes intense, and it becomes difficult to use the fat in foods. The resulting highly polyunsaturated fatty acid-containing fat has the same preservation stability as that of an ordinary edible fat, and has little oxidative rancidity. Any analysis method may be used as long as the predetermined organic compounds may be subjected to identification and quantification, but a preferable analysis method of aroma ingredients uses peak areas in the GC-TOFMS method from the viewpoints that presumption of the composition of detected ingredients may be performed in a relatively simple way by measurement of a precise mass, and that the measurement may be performed simultaneously with mass spectrometry by connecting to a sniffing device. The GC-TOFMS means a Time of Flight Mass Spectrometer, and is an analysis device for ionization under high vacuum using an electron ionization (EI) method, and obtaining a mass spectrum of a compound with use of the fact that a time of flight per a constant distance is different depending on a mass of an ion which has been accelerated by the electric field.

The highly polyunsaturated fatty acid-containing fat of the present disclosure is evaluated to have a good taste in sensory evaluation, and may be used in various foods in which the conventional highly polyunsaturated fatty acid-containing fat is hardly used. Examples of preferable intended use include dressing, shortening, margarine, chocolate, frozen dessert, frying oil, spray oil, mayonnaise, margarine, cookie, capsule, powder, and other fat-processed food.

### Examples

The present disclosure will be described in more detail below by way of examples. In the examples, both of % and part mean a weight basis.

### (Study in polyunsaturated fatty acid-containing edible vegetable fat)

### <Preparation of polyunsaturated fatty acid-containing edible vegetable fat>

In preparation of a polyunsaturated fatty acid-containing edible vegetable fat containing a water-soluble tea polyphenol, Sunphenon 90S manufactured by Taiyo Kagaku Co., Ltd. is used as a water-soluble tea polyphenol-containing composition. The content of a water-soluble tea polyphenol in a fat for confectionery was calculated on the assumption that the content of the water-soluble tea polyphenol in the water-soluble tea polyphenol-containing composition is 80% by weight from the fact that the content of the water-soluble polyphenol in the water-soluble tea polyphenol-containing composition is 80% by weight or more. As the polyunsaturated fatty acid-containing edible vegetable fat, linseed oil manufactured by Summit Oil Mill Co., Ltd. or perilla oil manufactured by Asahi and Co., Ltd. is used. The content of α linolenic acid in the former is 47%, and the content of α linolenic acid in the latter is 62%.

### <Method for preparing polyunsaturated fatty acid-containing edible vegetable fat A>

A water-soluble tea polyphenol-containing composition (product name: Sunphenon 90S, manufactured by Taiyo Kagaku Co., Ltd.) was added to water to prepare an aqueous solution dissolving 10% by weight of the water-soluble tea polyphenol-containing composition. Then, 0.2 g of an emulsifier (Poem PR-100, manufactured by Riken Vitamin Co., Ltd.) was added and dissolved to 1 kg of refined linseed oil (product name: Linseed Oil, manufactured by Summit Oil Mill Co., Ltd.) which had been warmed to 50°C, further, 2.5 g of the aqueous solution dissolving 10% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat A containing 200 ppm by weight of water-soluble tea polyphenol and 200 ppm by weight of emulsifier.

### <Method for preparing polyunsaturated fatty acid-containing edible vegetable fat B>

A water-soluble tea polyphenol-containing composition (product name: Sunphenon 90S, manufactured by Taiyo Kagaku Co., Ltd.) was added to water to prepare an aqueous solution dissolving 10% by weight of the water-soluble tea polyphenol-containing composition. Then, 0.3 g of an emulsifier (Poem PR-100, manufactured by Riken Vitamin Co., Ltd.) was added and dissolved to 1 kg of refined linseed oil (product name: Linseed Oil, manufactured by Summit Oil Mill Co., Ltd.,) which had been warmed to 50°C, further, 3.75 g of the aqueous solution dissolving 10% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat B containing 300 ppm by weight of water-soluble tea polyphenol and 300 ppm by weight of emulsifier.

### <Method for preparing polyunsaturated fatty acid-containing edible vegetable fat C>

A water-soluble tea polyphenol-containing composition (product name: Sunphenon 90S, manufactured by Taiyo Kagaku Co., Ltd.) was added to water to prepare an aqueous solution dissolving 10% by weight of the water-soluble tea polyphenol-containing composition. Then, 0.9 g of an emulsifier (Poem PR-100, manufactured by Riken Vitamin Co., Ltd.) was added and dissolved to 1 kg of refined linseed oil (product name: Linseed Oil, manufactured by Summit Oil Mill Co., Ltd.) which had been warmed to 50°C, further, 11.25 g of the aqueous solution dissolving 10% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat C containing 900 ppm by weight of water-soluble tea polyphenol and 900 ppm by weight of emulsifier.

### <Method for preparing polyunsaturated fatty acid-containing edible vegetable fat D>

A water-soluble tea polyphenol-containing composition (product name: Sunphenon 90S, manufactured by Taiyo Kagaku Co., Ltd.) was added to water to prepare an aqueous solution dissolving 30% by weight of the water-soluble tea polyphenol-containing composition. Then, 1.8 g of an emulsifier (Poem PR-100, manufactured by Riken Vitamin Co., Ltd.) was added and dissolved to 1 kg of refined linseed oil (product name: Linseed Oil, manufactured by Summit Oil Mill Co., Ltd.) which had been warmed to 50°C, further, 7.5 g of the aqueous solution dissolving 30% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat D containing 1800 ppm by weight of water-soluble tea polyphenol and 1800 ppm by weight of emulsifier.

<Method for preparing polyunsaturated fatty acid-containing edible vegetable fat E>

A water-soluble tea polyphenol-containing composition (product name: Sunphenon 90S, manufactured by Taiyo Kagaku Co., Ltd.) was added to water to prepare an aqueous solution dissolving 30% by weight of the water-soluble tea polyphenol-containing composition. Then, 3.0 g of an emulsifier (Poem PR-100, manufactured by Riken Vitamin Co., Ltd.) was added and dissolved to 1 kg of refined linseed oil (product name: Linseed Oil, manufactured by Summit Oil Mill Co., Ltd.) which had been warmed to 50°C, further, 12.5 g of the aqueous solution dissolving 30% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat E containing 3000 ppm by weight of water-soluble tea polyphenol and 3000 ppm by weight of emulsifier.

### <Method for preparing polyunsaturated fatty acid-containing edible vegetable fat F>

A water-soluble tea polyphenol-containing composition (product name: Sunphenon 90S, manufactured by Taiyo Kagaku Co., Ltd.) was added to water to prepare an aqueous solution dissolving 10% by weight of the water-soluble tea polyphenol-containing composition. Then, 0.9 g of an emulsifier (Poem PR-100, manufactured by Riken Vitamin Co., Ltd.) was added and dissolved to 1 kg of perilla oil (product name: Perilla Oil, manufactured by Asahi and Co., Ltd.) which had been warmed to 50°C, further, 11.25 g of the aqueous solution dissolving 10% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat F containing 900 ppm by weight of water-soluble tea polyphenol and 900 ppm by weight of emulsifier.

### <Method for preparing polyunsaturated fatty acid-containing edible fat G>

A water-soluble tea polyphenol-containing composition (product name: Sunphenon 90S, manufactured by Taiyo Kagaku Co., Ltd.) was added to water to prepare an aqueous solution dissolving 10% by weight of the water-soluble tea polyphenol-containing composition. Then, 0.1 g of an emulsifier (Poem PR-100, manufactured by Riken Vitamin Co., Ltd.) was added and dissolved to 1 kg of refined linseed oil (product name: Linseed Oil, manufactured by Summit Oil Mill Co., Ltd.) which had been warmed to 50°C, further, 1.25 g of the aqueous solution dissolving 10% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat G containing 100 ppm by weight of water-soluble tea polyphenol and 100 ppm by weight of emulsifier.

### <Method for preparing polyunsaturated fatty acid-containing edible vegetable fat H>

A water-soluble tea polyphenol-containing composition (product name: Sunphenon 90S, manufactured by Taiyo Kagaku Co., Ltd.) was added to water to prepare an aqueous solution dissolving 10% by weight of the water-soluble tea polyphenol-containing composition. Then, 6.0 g of an emulsifier (Poem PR-100, manufactured by Riken Vitamin Co., Ltd.) was added to 1 kg of refined linseed oil (product name: Linseed Oil, manufactured by Summit Oil Mill Co., Ltd.) which had been warmed to 50°C, further, 11.25 g of the aqueous solution dissolving 10% by weight of the water-soluble tea polyphenol-containing composition was added, and the mixture was stirred with a homomixer (TK ROBO MIX: manufactured by Tokushu Kika Kogyo Co., Ltd.) under 10000 rpm × 10 minutes. Thereafter, under reduced pressure conditions of 50°C and 10 torr, the mixture was subjected to dehydration treatment for 30 minutes while stirring to obtain polyunsaturated fatty acid-containing edible vegetable fat H containing 900 ppm by weight of water-soluble tea polyphenol and 600 ppm by weight of emulsifier.

### <Evaluation method>

### (1) Method of sensory evaluation of polyunsaturated fatty acid-containing edible vegetable fat

The taste was evaluated by a smelling sense and taste sense of 10 panelists into ranks "5", "4", "3", "2", and "1" in order of excellent to poor taste, and the average evaluation point was assumed to be an evaluation result. Four point or more was judged as acceptable. The fat was evaluated immediately after preparation, and after preservation at 40°C for 2 weeks under light shielding.

### (2) CDM stability time

An oxidation stability of edible fat was evaluated by using CDM testing machine, Rancimat, manufactured by Metrohm AG. Determination of oxidation stability of each edible fat was carried out by comparing time difference caused by extension of CDM time stability in correlation with increase in oxidation stability of edible fat. Measurement conditions: measurement temperature: 120°C, air throughput: 20 L/h, 3 g of fat sample was amounted.

Separately, a CDM stability time was measured for which among measurement conditions, only the measurement temperature was changed to 96°C. This measurement value was described as a reference value.

### (Evaluation of oxidation stability of polyunsaturated fatty acid-containing edible vegetable fat)

A P/S value was calculated by the following method, and oxidation stability was compared and evaluated by using a CDM stability time as an index:
P: CDM stability time of the polyunsaturated fatty acid-containing edible vegetable fat,
S: CDM stability time of refined soybean oil to which no antioxidant substance is added.

### (Example A1)

The polyunsaturated fatty acid-containing edible vegetable fat A was used as an edible fat as is. This edible fat was evaluated according to the above-described method.

### (Example A2)

The polyunsaturated fatty acid-containing edible vegetable fat B was used as an edible fat as is. This edible fat was evaluated according to the above-described method.

### (Example A3)

The polyunsaturated fatty acid-containing edible vegetable fat C was used as an edible fat as is. This edible fat was evaluated according to the above-described method.

### (Example A4)

The polyunsaturated fatty acid-containing edible vegetable fat D was used as an edible fat as is. This edible fat was evaluated according to the above-described method.

### (Example A5)

The polyunsaturated fatty acid-containing edible vegetable fat E was used as an edible fat as is. This edible fat was evaluated according to the above-described method.

### (Example A6)

The polyunsaturated fatty acid-containing edible vegetable fat F was used as an edible fat as is. This edible fat was evaluated according to the above-described method.

### (Comparative Example A1)

Linseed oil (product name: Linseed Oil, manufacture by Summit Oil Mill Co., Ltd.) was evaluated according to the above-described method.

### (Comparative Example A2)

The polyunsaturated fatty acid-containing edible vegetable fat G was used as an edible fat as is. This edible fat was evaluated according to the above-described method.

### (Comparative Example A3)

The polyunsaturated fatty acid-containing edible vegetable fat H was used as an edible fat as is. This edible fat was evaluated according to the above-described method.

The results of sensory evaluation of Example A1 to Example A6 and Comparative Example A1 to Comparative Example A3, and the CDM stability time are shown in Table 1. Additionally, the CDM stability time of refined soybean oil with no antioxidant substance (product name: Daizu Sirasimeyu N, manufactured by Fuji Oil Co., Ltd., α linolenic acid content 5%) is also shown.

**[Table 1]**

| | Example A1 | Example A2 | Example A3 | Example A4 | Example A5 | Example A6 | Comparative Example A1 | Comparative Example A2 | Comparative Example A3 | Soybean oil |
|---|---|---|---|---|---|---|---|---|---|---|
| Tea polyphenol (ppm by weight) | 200 | 300 | 900 | 1800 | 3000 | 900 | 0 | 100 | 900 | - |
| Emulsifier (ppm by weight) | 200 | 300 | 900 | 1800 | 3000 | 900 | 0 | 100 | 6000 | - |
| CDM stability time = P | 3.3 | 3.7 | 5.1 | 8.1 | 11.5 | 4.4 | Unmeasurable | 2.6 | 5.1 | |
| CDM stability time of soybean oil =S | - | - | - | - | - | - | - | - | - | 3.5 |
| P/S | 0.9 | 1.1 | 1.5 | 2.3 | 3.3 | 1.3 | Uncalcul-atable | 0.7 | 1.5 | - |
| Sensory evaluation immediately after production | 5.0 | 5.0 | 5.0 | 5.0 | 5.0 | 5.0 | 5.0 | 5.0 | 3.6 | - |
| Sensory evaluation after storage at 40°C in dark place for 2 weeks | 4.3 | 4.5 | 4.7 | 4.7 | 4.3 | 4.6 | 2.5 | 3.8 | 3.5 | - |
| CDM stability time (96°C) | 22.2 | 23.6 | 37.4 | 49.5 | 67.4 | 28.3 | 5.7 | 17.0 | 37.0 | 19.2 |

### (Discussion of Table 1)

- In Examples A1 to A6, the P/S value was 0.9 or more, and oxidation stability equal to that of the soybean oil was obtained.
- In Examples A1 to A6 in which the oxidation stability is equal to that of soybean, a taste was good as being score 4 or more in sensory evaluation after preservation in dark place at 40°C for 2 weeks.
- In Comparative Example A1, the oxidation stability was low and the CDM stability could not be measured. In sensory evaluation after preservation in dark place at 40°C for 2 weeks, the oxidative rancidity of the fat was felt, and the fat was not acceptable.
- In Comparative Examples A2, the P/S value was 0.7, resulting in that the oxidation stability was lower than that of the soybean oil. In sensory evaluation after preservation in dark place at 40°C for 2 weeks, the result was better than that of Comparative Example 1, but the oxidative rancidity of the fat was felt, and the fat was not acceptable.
- In Comparative Example A3, from immediately after preparation, an off-taste derived from the emulsifier was felt, and the fat was not acceptable.

### (Example A7)

| | |
|---|---|
| Polyunsaturated fatty acid-containing ediblevegetable fat B | 65 parts |
| Dextrin ("TK-15" manufactured by Matsutani Chemical Industry Co., Ltd.) | 25 parts |
| Emulsifier (glycerol fatty acid ester, "Emulsy MS" manufactured by Riken Vitamin Co., Ltd.) | 2 parts |
| Sodium caseinate | 8 parts |

An oily phase part obtained by mixing a fat and an emulsifier, and an aqueous phase part obtained by mixing 100 parts of water, dextrin, and sodium caseinate were prepared, they were pre-emulsified with a homomixer (TK ROBO MIX: manufactured by Tokushu Kika Kogyo Co., Ltd.) at 8500 rpm for 5 minutes, homogenized at a homogenization pressure of 150 Kg/cm² using a homogenizer (manufactured by Fukao Seiki Co., Ltd.), and spray-dried at a hot air temperature of 175°C using a spray drier (B290 manufactured by Nihon BUCHI).

A powdery fat after preparation had no odor, and a good taste.

### (Comparative Example A4)

| | |
|---|---|
| Linseed oil (product name: Linseed Oil, manufactured by Summit Oil Mill Co., Ltd.) | 65 parts |
| Dextrin ("TK-15" manufactured by Matsutani Chemical Industry Co., Ltd.) | 25 parts |
| Emulsifier (glycerol fatty acid ester, "Emulsy MS" manufactured by Riken Vitamin CO., Ltd.) | 2 parts |
| Sodium caseinate | 8 parts |

An oily phase part obtained by mixing a fat and an emulsifier and an aqueous phase part obtained by mixing 100 parts of water, dextrin, and sodium caseinate were prepared, they were pre-emulsified with a homomixer (TK ROBO MIX: manufacture by Tokushu Kika Kogyo Co., Ltd.) at 8500 rpm for 5 minutes, homogenized at a homogenization pressure of 150 Kg/cm² using a homogenizer (manufacture by Fukao Seiki Co., Ltd.), and spray-dried at a hot air temperature of 175°C using a spray dryer (B290 manufactured by Nihon BUCHI).

A powder fat after preparation had oxidative rancidity of the fat, and was inferior in taste as compared with Example A7.

### (Preparation Example 1)

### Preparation Example of mayonnaise

Mayonnaise containing a polyunsaturated fatty acid is obtained by using the polyunsaturated fatty acid-containing edible vegetable fats A to F in the whole amount of a fat part according to the following mayonnaise formulation, and employing a colloid mill.

**Mayonnaise formulation**

| | |
|---|---|
| Fat | 70.0 parts |
| Yolk | 15.0 parts |
| Vinegar | 12.5 parts |
| Common salt | 2.0 parts |
| Seasoning | 0.5 parts |

### (Preparation Example 2)

### Preparation Example of margarine

Margarine containing a polyunsaturated fatty acid is obtained according to the following margarine formulation in which an oily phase is obtained by blending 50 parts of the polyunsaturated fatty acid-containing edible vegetable fats A to F and 50 parts of high melting point fat (product name: Parkid V, manufactured by Fuji Oil Co., Ltd.) by using a combinator.

**Margarine formulation**

| | |
|---|---|
| Oily phase | 82 parts |
| Aqueous phase | 18 parts |
| Stearic acid-based monoglyceride | 0.3 parts |
| Soybean lecithin | 0.3 parts |
| Purified salt | 1.0 part |
| Skimmed milk powder | 3.0 parts |

### (Study in highly polyunsaturated fatty acid-containing fat)

### <Preparation of highly polyunsaturated fatty acid-containing fat>

In preparation of a highly polyunsaturated fatty acid-containing fat containing a tea polyphenol, Sunphenon 90S manufactured by Taiyo Kagaku Co., Ltd. is used as a tea polyphenol-containing composition. The content of a tea polyphenol was calculated on the assumption that the content of the tea polyphenol in the water-soluble tea polyphenol-containing composition is 80% by weight from the fact that the content of the water-soluble polyphenol in the water-soluble tea polyphenol-containing composition is 80% by weight or more.

### <Composition of fatty acid in fat to be used and preparation method>

Sardine oil (manufactured by Yokozeki Oil & Fat Industries Co., Ltd.), tuna oil (manufactured by Yokozeki Oil & Fat Industries Co., Ltd.), and refined soybean oil with no antioxidant substance (manufactured by Fuji Oil Co., Ltd.) were used. A fatty acid having five or more double bonds was 15.4%, 29.0%, and 0.0%, respectively. Each oil was rapidly used after being subjected to purification step.

### <Method for preparing highly polyunsaturated fatty acid-containing fat A>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 993 g of sardine oil, further, 5.0 g of the aqueous solution dissolving 50% by weight of the tea polyphenol-containing composition was added, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat A containing 2000 ppm by weight of tea polyphenol.

### <Method for preparing highly polyunsaturated fatty acid-containing fat B>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of sardine oil, further, 5.0 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat B containing 2000 ppm by weight of tea polyphenol.

### <Method for preparing highly polyunsaturated fatty acid-containing fat C>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of sardine oil, further, 10.0 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat C containing 4000 ppm by weight of tea polyphenol.

### <Method for preparing highly polyunsaturated fatty acid-containing fat D>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of sardine oil, further, 20.0 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat D containing 8000 ppm by weight of tea polyphenol.

### <Method for preparing highly polyunsaturated fatty acid-containing fat E>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of sardine oil, further, 10.0 g of the aqueous solution dissolving 50% by weight of the tea polyphenol-containing composition was added, TBHQ (reagent, manufactured by Wako Pure Chemical Industries, Ltd.) was added at 0.2 g corresponding to an upper limit value of 200 ppm at which addition is accepted in USA, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat E containing 4000 ppm by weight of tea polyphenol and 200 ppm by weight of TBHQ.

### <Method for preparing highly polyunsaturated fatty acid-containing fat F>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Ascorbic acid (reagent, manufactured by Wako Pure Chemical Industries, Ltd.) was added to water to prepare an aqueous solution dissolving 20% by weight of the ascorbic acid. Then, 2.0 g of an emulsifier (SY Glyster CRS-75, manufactured by Sakamoto Yakuhin Kogyo Co., Ltd.) was added and dissolved to 980 g of sardine oil, further, 5.0 g of the aqueous solution dissolving 50% by weight of the tea polyphenol-containing composition added, further, 10.0 g of the aqueous solution dissolving 20% by weight of the ascorbic acid was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat F containing 2000 ppm by weight of tea polyphenol and 2000 ppm by weight of ascorbic acid.

### <Method for manufacturing highly polyunsaturated fatty acid-containing fat G>

To the mixture of 500 g of sardine oil and 480 g of soybean oil, 2.0 g of an emulsifier (SY Glyster CRS-75, manufactured by Sakamoto Yakuhin Kogyo Co., Ltd.) was added and dissolved, further, 1.5 g of an aqueous solution dissolving 50% of weight of a tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat G containing 600 ppm by weight of tea polyphenol.

### <Method for preparing highly polyunsaturated fatty acid-containing fat H>

To 980 g of sardine oil, 2.0 g of an emulsifier (SY Glyster CRS-75, manufactured by Sakamoto Yakuhin Kogyo Co., Ltd.) was added and dissolved, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat H.

### <Method for producing highly polyunsaturated fatty acid-containing fat I>

To 980 g of sardine oil, 2.0 g of an emulsifier (SY Glyster CRS-75, manufactured by Sakamoto Yakuhin Kogyo Co., Ltd.) was added and dissolved, further, 1.5 g of tocopherol (product name E-mix D, manufactured by Eisai Co., ltd.) was added, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat I containing 1500 ppm by weight of tocopherol.

### <Method for preparing highly polyunsaturated fatty acid-containing fat J>

To 980 g of sardine oil, 2.0 g of an emulsifier (SY Glyster CRS-75, manufactured by Sakamoto Yakuhin Kogyo Co., Ltd.) was added and dissolved, further, 0.2 g of TBHQ (reagent, manufacture by Wako Pure Chemical Industries, Ltd.) was added, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat J containing 200 ppm by weight of TBHQ.

### <Method for preparing highly polyunsaturated fatty acid-containing fat K>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 960 g of sardine oil, further, 5.0 g of the aqueous solution dissolving 50% by weight of the tea polyphenol-containing composition was added, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat K containing 2000 ppm by weight of tea polyphenol.

### <Method for preparing highly polyunsaturated fatty acid-containing fat L>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 5.0 g of the aqueous solution dissolving 50% by weight of the tea polyphenol-containing composition was added to 980 g of sardine oil, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat L containing no emulsifier but containing 2000 ppm by weight of tea polyphenol.

### <Method for preparing highly polyunsaturated fatty acid-containing fat M>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 7.0 g of an emulsifier (SY Glyster CRS-75, manufactured by Sakamoto Yakuhin Kogyo Co., Ltd.) was added and dissolved to 980 g of sardine oil, further, 5.0 g of the aqueous solution dissolving 50% by weight of the tea polyphenol-containing composition was added, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat M containing 2000 ppm by weight of tea polyphenol.

### <Method for preparing highly polyunsaturated fatty acid-containing fat N>

To 980 g of sardine oil, 2.0 g of an emulsifier (SY Glyster CRS-75, manufactured by Sakamoto Yakuhin Kogyo Co., Ltd.) was added and dissolved, further, 2.0 g of a tea polyphenol preparation (product name Sankatol, manufactured by Taiyo Kagaku Co., Ltd.) was added, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain a highly polyunsaturated fatty acid-containing fat N containing 2000 ppm by weight of tea polyphenol preparation.

### <Method for preparing highly polyunsaturated fatty acid-containing fat 0>

To 980 g of sardine oil, 2.0 g of an emulsifier (SY Glyster CRS-75, manufactured by Sakamoto Yakuhin Kogyo Co., Ltd.) was added and dissolved, further, 10.0 g of a tea polyphenol preparation (product name Sankatol, manufactured by Taiyo Kagaku Co., Ltd.) was added, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat O containing 10000 ppm by weight of tea polyphenol preparation.

### <Method for preparing highly polyunsaturated fatty acid-containing fat P>

To the mixture of 500 g of sardine oil and 480 g of soybean oil, 2.0 g of an emulsifier (SY Glyster CRS-75, manufactured by Sakamoto Yakuhin Kogyo Co., Ltd.) was added and dissolved, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat P.

### <Method for preparing highly polyunsaturated fatty acid-containing fat Q>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of tuna oil, further, 10.0 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat Q containing 4000 ppm by weight of tea polyphenol.

### <Method for preparing highly polyunsaturated fatty acid-containing fat R>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of tuna oil, further, 20.0 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat R containing 8000 ppm by weight of tea polyphenol.

### <Method for preparing highly polyunsaturated fatty acid-containing fat S>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 580 g of soybean oil was added to 400 g of tuna oil, and 2.0 of an emulsifier (SY Glyster CRS-75, manufactured by Sakamoto Yakuhin Kogyo Co., Ltd.) was added and dissolved to the mixed oil, further, 5.0 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat S containing 2000 ppm by weight of tea polyphenol.

### <Method for preparing highly polyunsaturated fatty acid-containing fat T>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 580 g of soybean oil was added to 400 g of tuna oil, and 2.0 g of an emulsifier (SY Glyster CRS-75, manufactured by Sakamoto Yakuhin Kogyo Co., Ltd.) was added and dissolved to the mixed oil, further, 5.0 g of the aqueous solution dissolving 50% by weight of the tea polyphenol-containing composition was added, thereafter, 1.5 g of an ascorbyl palmitate preparation (product name Aircoat C, manufactured by Mitsubishi-Kagaku Foods Corporation) was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat T containing 2000 ppm by weight of tea polyphenol and 1500 ppm of ascorbyl palmitate preparation.

### <Method for preparing highly polyunsaturated fatty acid-containing fat U>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 580 g of soybean oil was added to 400 g of tuna oil, and 2.0 g of an emulsifier (SY Glyster CRS-75, manufactured by Sakamoto Yakuhin Kogyo Co., Ltd.) was added and dissolved to the mixed oil, further, 5.0 g of the aqueous solution dissolving 50% by weight of the tea polyphenol-containing composition was added, thereafter, 0.2 g of TBHQ was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat U containing 2000 ppm by weight of tea polyphenol and 200 ppm of TBHQ.

### <Method for preparing highly polyunsaturated fatty acid-containing fat V>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 580 g of soybean oil was added to 400 g of tuna oil, and 2.0 g of an emulsifier (SY Glyster CRS-75, manufactured by Sakamoto Yakuhin Kogyo Co., Ltd.) was added and dissolved to the mixed oil, further, 5.0 g of the aqueous solution dissolving 50% by weight of the tea polyphenol-containing composition was added, thereafter, 0.2 g of TBHQ, 1.5 g of an ascorbyl palmitate preparation (product name Aircoat C, manufactured by Mitsubishi-Kagaku Foods Corporation:), and 10.0 g of a rosemary extract preparation (product name: RM21B base, manufactured by Mitsubishi Chemical Corporation) were added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat V containing 2000 ppm by weight of tea polyphenol, 200 ppm of TBHQ, 1500 ppm of ascorbyl palmitate preparation, and 1000 ppm of rosemary extract preparation.

### <Method for preparing highly polyunsaturated fatty acid-containing fat W>

To 980 g of tuna oil, 2.0 g of an emulsifier (SY Glyster CRS-75, manufactured by Sakamoto Yakuhin Kogyo Co., Ltd.) was added and dissolved, thereafter, water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat W.

### <Method for preparing highly polyunsaturated fatty acid-containing fat X>

A tea polyphenol-containing composition (product name Sunphenon 90S, manufactured by Taiyo Kagaku Co., Ltd.) was added to water to prepare an aqueous solution dissolving 50% by weight of the tea polyphenol-containing composition. Then, 2.0 g of an emulsifier (SY Glyster CRS-75, manufactured by Sakamoto Yakuhin Kogyo Co., Ltd.) was added and dissolved to 980 g of tuna oil, further, 2.5 g of the aqueous solution dissolving 50% by weight of the tea polyphenol-containing composition was added, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat X containing 1000 ppm by weight of tea polyphenol.

### <Method for producing highly polyunsaturated fatty acid-containing fat Y>

To the mixture of 400 g of tuna oil and 580 g of soybean oil, 2.0 g of an emulsifier (SY Glyster CRS-75, manufactured by Sakamoto Yakuhin Kogyo Co., Ltd.) was added and dissolved, and then water was added so as to make the total amount 1000 g, and the mixture was stirred with a homomixer (TK ROBO MIX: manufactured by Tokushu Kika Kogyo Co., Ltd.) under 10000 rpm × 5 minutes, to obtain highly polyunsaturated fatty acid-containing fat Y.

### <Evaluation method>

### (1) Method of sensory evaluation of highly polyunsaturated fatty acid-containing fat immediately after preparation

The taste was evaluated by a smelling sense and taste sense of 10 panelists into ranks "5", "4", "3", "2", and "1" in order of excellent to poor taste, and the average evaluation point was assumed to be an evaluation result. Four point or more was judged as acceptable.

### (2) Method of sensory evaluation of fat which has been subjected to preservation test

Each oil which had been stirred under shaking at 60°C and 100 rpm in an open system was continuously sampled, and the taste was evaluated by a smelling sense and taste sense of 10 panelists into ranks "5", "4", "3", "2", and "1" in order of excellent to poor taste, and the average evaluation point was assumed to be an evaluation result. Four point or more was judged as acceptable.

### (3) CDM stability time

An oxidation stability of edible fat was evaluated by using CDM testing machine, Rancimat, manufactured by Metrohm AG. Determination of oxidation stability of each edible fat was carried out by comparing time difference caused by extension of CDM time stability in correlation with increase in oxidation stability of edible fat. Measurement conditions: measurement temperature: 120°C, air throughput: 20 L/h, 3 g of fat sample was amounted.

For comparing with oxidation stability of soybean oil, an A/S value obtained by the following method was used to perform evaluation:
A: CDM stability time at 100°C of the highly polyunsaturated fatty acid-containing fat,
S: CDM stability time at 100°C of refined soybean oil to which no antioxidant substance is added.

### (4) Aroma analysis method

An analysis was performed by the following method with using GC-TOFMS manufactured by LECO (product name: Pegasus 4D), and evaluation was performed by using, as a standard, a value obtained by dividing a detected peak average area of predetermined aroma ingredients α in conformity with the NIST library by a detected peak average area of predetermined aroma ingredients β.

Method of analyzing aroma ingredients; three grams of a fat was retained at 60°C for 15 minutes, aroma ingredients were adsorbed onto fibers of Divinylbenzene/Polydimethylsiloxane/Carboxen (60°C and 15 minutes), thereafter, aroma ingredients were desorbed at 240°C, and baked at 260°C for 20 minutes, and aroma ingredients were analyzed by GC-TOFMS. As a column of a GC part, Stabil-WAX (length 30 m and inner diameter 0.32 mm and liquid phase film thickness 0.5 pm) was used. Predetermined aroma ingredients (α); 2-Heptenal, 2,4-Nonadienal, 2,4-Heptadienal, 3,5-Octadien-2-one, 2-Butenal, 3,4-Pentadienal, 2,2-dimethyl, 1-Penten-3-one, 2,4-Hexadienal, 2(5H)-Furanone, 5-ethyl Predetermined aroma ingredients (β); Phenol, Toluene

Highly polyunsaturated fatty acid-containing fats A to Y used in the examples and the comparative examples are shown in Table 2.

**[Table 2]**

| | | Ratio of fatty acid having 5 or more bonds |
|---|---|---|
| Example B1 | Highly polyunsaturated fatty acid-containing fat A | 15.3% |
| Example B2 | Highly polyunsaturated fatty acid-containing fat B | 15.1% |
| Example B3 | Highly polyunsaturated fatty acid-containing fat C | 15.1% |
| Example B4 | Highly polyunsaturated fatty acid-containing fat D | 15.1% |
| Example B5 | Highly polyunsaturated fatty acid-containing fat E | 15.1% |
| Example B6 | Highly polyunsaturated fatty acid-containing fat F | 15.1% |
| Example B7 | Highly polyunsaturated fatty acid-containing fat G | 7.7% |
| Comparative Example B1 | Highly polyunsaturated fatty acid-containing fat H | 15.1% |
| Comparative Example B2 | Highly polyunsaturated fatty acid-containing fat I | 15.1% |
| Comparative Example B3 | Highly polyunsaturated fatty acid-containing fat J | 15.1% |
| Comparative Example B4 | Highly polyunsaturated fatty acid-containing fat K | 14.5% |
| Comparative Example B5 | Highly polyunsaturated fatty acid-containing fat L | 15.1% |
| Comparative Example B6 | Highly polyunsaturated fatty acid-containing fat M | 15.1% |
| Comparative Example B7 | Highly polyunsaturated fatty acid-containing fat N | 15.1% |
| Comparative Example B8 | Highly polyunsaturated fatty acid-containing fat O | 15.1% |
| Comparative Example B9 | Highly polyunsaturated fatty acid-containing fat P | 7.7% |
| Example B8 | Highly polyunsaturated fatty acid-containing fat Q | 28.4% |
| Example B9 | Highly polyunsaturated fatty acid-containing fat R | 28.4% |
| Example B10 | Highly polyunsaturated fatty acid-containing fat S | 11.6% |
| Example B11 | Highly polyunsaturated fatty acid-containing fat T | 11.6% |
| Example B12 | Highly polyunsaturated fatty acid-containing fat U | 11.6% |
| Example B13 | Highly polyunsaturated fatty acid-containing fat V | 11.6% |
| Comparative Example B10 | Highly polyunsaturated fatty acid-containing fat W | 28.4% |
| Comparative Example B11 | Highly polyunsaturated fatty acid-containing fat X | 28.4% |
| Comparative Example B12 | Highly polyunsaturated fatty acid-containing fat Y | 11.6% |

Additives used in the examples and the comparative examples and blending amounts thereof are shown in Table 3.

**[Table 3]**

| | Content of tea polyphenol (PPM by weight) | Other antioxidant substances and contents thereof (content is PPM by weight) | Amount of emulsifier | Content of emulsifier/ tea polyphenol | Water |
|---|---|---|---|---|---|
| Example B1 | 2000 | - | 0.2% | 1.0 | 0.3% |
| Example B2 | 2000 | - | 0.2% | 1.0 | 1.6% |
| Example B3 | 4000 | - | 0.2% | 0.5 | 1.3% |
| Example B4 | 8000 | - | 0.2% | 0.3 | 0.8% |
| Example B5 | 4000 | TBHQ 200 | 0.2% | 0.5 | 1.3% |
| Example B6 | 2000 | Ascorbic acid 2000 | 0.2%, | 1.0 | 1.4% |
| Example B7 | 600 | - | 0.2% | 3.3 | 1.7% |
| Comparative Example B1 | - | - | 0.2% | - | 1.8% |
| Comparative Example B2 | - | Tocopherol 1500 | 0.2% | - | 1.7% |
| Comparative Example B3 | - | TBHQ 200 | 0.2% | - | 1.8% |
| Comparative Example B4 | 2000 | - | 0.2% | 1.0 | 5.6% |
| Comparative Example B5 | 2000 | - | 0.0% | 0.0 | 1.8% |
| Comparative Example B6 | 2000 | - | 0.7% | 3.5 | 1.1% |
| Comparative Example B7 | 200 | Tea polyphenol preparation 2000 | 0.2% | 10.0 | 1.6% |
| Comparative Example B8 | 1000 | Tea polyphenol preparation 10000 | 0.2% | 2.0 | 0.8% |
| Comparative Example B9 | | - | 0.2% | - | 1.8% |
| Example B8 | 4000 | - | 0.2 | 0.5 | 1.3% |
| Example B9 | 8000 | - | 0.2 | 0.3 | 0.8% |
| Example BI0 | 2000 | - | 0.2% | 1.0 | 1.6% |
| Example B11 | 2000 | Ascorbyl palmitate preparation 1500 | 0.2% | 1.0 | 1.4% |
| Example B12 | 2000 | TBHQ 200 | 0.2% | 1.0 | 1.5% |
| Example B13 | 2000 | TBHQ 200, Ascorbyl palmitate preparation 1500 Rosemary extract preparation 1000 | 0.2% | 1.0 | 1.3% |
| Comparative Example B10 | - | - | 0.2% | - | 1.8% |
| Comparative Example B11 | 1000 | - | 0.2% | 2.0 | 1.7% |
| Comparative Example B12 | - | - | 0.2% | - | 1.8% |

Evaluation results of a taste immediately after preparation and the CDM stability time are shown in Table 4. The CDM stability time of refined soybean oil with no antioxidant substance is also shown in Table 4.

**[Table 4]**

| | Taste immediately after preparation | CDM stability time | A/S |
|---|---|---|---|
| Example B1 | 5.0 | 20.4 hours | 0.96 |
| Example B2 | 5.0 | 17.4 hours | 0.82 |
| Example B3 | 4.9 | 26.3 hours | 1.24 |
| Example B4 | 4.3 | 40.2 hours | 1.90 |
| Example B5 | 4.7 | 33.0 hours | 1.56 |
| Example B6 | 4.5 | 21.7 hours | 1.02 |
| Example B7 | 5.0 | 17.9 hours | 0.84 |
| Comparative Example B1 | 4.4 | 2.4 hours | 0.11 |
| Comparative Example B2 | 4.4 | 3.4 hours | 0.16 |
| Comparative Example B3 | 4.5 | 6.5 hours | 0.31 |
| Comparative Example B4 | 5.0 | 10.2 hours | 0.48 |
| Comparative Example B5 | 4.7 | 12.6 hours | 0.59 |
| Comparative Example B6 | 3.8 | 17.8 hours | 0.84 |
| Comparative Example B7 | 2.4 | 4.5 hours | 0.21 |
| Comparative Example B8 | 1.0 | 17.0 hours | 0.80 |
| Comparative Example B9 | 4.8 | 13.9 hours | 0.66 |
| Example B8 | 4.8 | 21.5 hours | 1. 01 |
| Example B9 | 4.3 | 32.4 hours | 1.53 |
| Example B10 | 5.0 | 34.1 hours | 1.61 |
| Example B11 | 4.9 | 33.6 hours | 1.58 |
| Example B12 | 4.8 | 46.8 hours | 2.21 |
| Example B13 | 4.6 | 48.6 hours | 2.29 |
| Comparative Example B10 | 3.9 | 1.2 hours | 0.06 |
| Comparative Example B11 | 4.7 | 8.6 hours | 0.41 |
| Comparative Example B12 | 4.5 | 6.3 hours | 0.30 |
| Soybean oil | - | 21.2 hours | - |

### (Discussion of Table 4)

- Examples B1 to B13 had a good taste immediately after preparation. Each of Examples B1 to B13 had an A/S value of 0.8 or more, and was able to use as well as soybean oil.
- Comparative Example B4 had intense white turbidity, and low oxidation stability, and was not able to be used.
- In Comparative Example B5, a water-soluble tea polyphenol which was equal to those of Examples B1 and B2 was added, but the dispersibility of the water-soluble tea polyphenol was deteriorated, and the sufficient effect corresponding to the addition amount of the water-soluble tea polyphenol was not obtained.
- Comparative Example B6 had 0.8 or more of A/S value, but there was an odor peculiar to the emulsifier immediately after preparation, and the fat was not able to be used for food.
- Comparative Example B8 had 0.8 of A/S value, but an irritating taste and an odor peculiar to the tea polyphenol preparation existed from immediately after preparation, and the fat was not able to be used.
- In Comparative Example B11, the content of the water-soluble tea polyphenol was insufficient relative to the amount of the fatty acid having five or more double bonds, and the A/S value was 0.41, which was less than 0.8.

α/β values by GC-TOFMS analysis, and the results of sensory evaluation after 3 days from stirring at 60°C are shown in Table 5.

**[Table 5]**

| | GC-TOFMS (α/β) After 3 days at 60°C | Evaluation of taste after 3 days at 60°C |
|---|---|---|
| Example B1 | 0.4 | 4.6 |
| Example B2 | 0.4 | 4.5 |
| Example B3 | 0.4 | 4.7 |
| Example B4 | 0.3 | 4.2 |
| Example B5 | 0.2 | 4.6 |
| Example B6 | 0.3 | 4.3 |
| Example B7 | 0.4 | 4.2 |
| Comparative Example B1 | 64.6 | 1.0 |
| Comparative Example B2 | 41.0 | 1.0 |
| Comparative Example B3 | 1.432 | 4.0 |
| Comparative Example B4 | - | - |
| Comparative Example B5 | - | - |
| Comparative Example B6 | - | - |
| Comparative Example B7 | - | - |
| Comparative Example B8 | - | - |
| Comparative Example B9 | 25.9 | 1.3 |
| Example B8 | 0.5 | 4.5 |
| Example B9 | 0.4 | 4.2 |
| Example B10 | 0.4 | 4.6 |
| Example B11 | 0.2 | 4.7 |
| Example B12 | 0.3 | 4.8 |
| Example B13 | 0.2 | 4.6 |
| Comparative Example B10 | 71.1 | 1.0 |
| Comparative Example B11 | 7.89 | 3.4 |
| Comparative Example B12 | 34.702 | 1.1 |

### (Discussion of Table 5)

- In the highly polyunsaturated fatty acid-containing fats of Example B1 to Example B12 in each of which the α/β value by GC-TOFMS analysis after 3 days at 60°C was 7 or less, a good result was also obtained in taste evaluation after 3 days at 60°C.
- In Example B4, Example B6 and Example B13, a taste immediately after preparation was slightly inferior to that of Example B1, but the α/β value by GC-TOFMS analysis was as good as 7 or less, and taste evaluation after 3 days at 60°C was also good.
- Comparative Example B4 was considered to be difficult for use due to intense white turbidity, and the preservation test was not performed.
- In Comparative Example B5, a water-soluble tea polyphenol which was equal to those of Examples B1 and B2 was added, but the dispersibility of the water-soluble tea polyphenol was deteriorated, and the effect corresponding to the addition amount of the water-soluble tea polyphenol was not obtained, and therefore, the preservation test was not performed.
- In Comparative Example B6 to Comparative Example B8, taste evaluation at the initial stage was remarkably deteriorated, and the preservation test was not performed.
- In Example B11, the CDM stability time was equal to that of Example B2, but regarding the taste evaluation after 3 days at 60°C and the α/β value by GC-TOFMS, more preferable results than those of Example B2 were obtained.
- The result of taste evaluation after 3 days at 60°C of Comparative Example B11, in which the α/β value by GC-TOFMS analysis after 3 days at 60°C was 7.89, was determined to be not acceptable.

### Industrial Applicability

The present invention provides a polyunsaturated fatty acid-containing fat which is improved in oxidation stability by an easy method and has a good taste. By using the polyunsaturated fatty acid-containing fat of the present invention, generation of an oxidized oil odor and a peroxide which adversely influences on health may be suppressed over a long period of time. A polyunsaturated fatty acid-containing fat having high health superiority can be utilized in foods etc.

## Claims

1. A method for producing a polyunsaturated fatty acid-containing edible vegetable fat, comprising adding a water-soluble tea polyphenol to an aqueous medium, and adding the water-soluble tea polyphenol in a solution state to a fat, wherein the polyunsaturated fatty acid-containing edible vegetable fat comprises 30% by weight to 80% by weight of α linolenic acid in a constituent fatty acid composition, wherein a content of a water-soluble tea polyphenol is 150 ppm by weight to 4000 ppm by weight and a content of an emulsifier is 150 ppm by weight to 4000 ppm by weight based on the polyunsaturated fatty acid-containing edible vegetable fat, wherein the content of the emulsifier in the fat is 1.5 times or less than the content of the water-soluble tea polyphenol, and wherein a P/S value obtained by a method below is 0.8 or more,
P: CDM stability time of the polyunsaturated fatty acid-containing edible vegetable fat containing 150 ppm by weight to 4000 ppm by weight of the water-soluble tea polyphenol,
S: CDM stability time of refined soybean oil to which no antioxidant substance is added,
wherein CDM stability time is measured as given in the method in JOCS Standard Methods for the Analysis of Fats and Oils 2.5.1.2-1996.

2. The method according to claim 1, wherein the content of the water-soluble tea polyphenol is 250 ppm by weight to 2500 ppm by weight and the content of the emulsifier is 250 ppm by weight to 2500 ppm by weight based on the polyunsaturated fatty acid-containing edible vegetable fat, wherein the content of the emulsifier in the fat is 1.2 times or less than the content of the water-soluble tea polyphenol, and wherein a P/S value obtained by a method below is 1.0 or more,
P: CDM stability time of the polyunsaturated fatty acid-containing edible vegetable fat containing 250 ppm by weight to 2000 ppm by weight of the water-soluble tea polyphenol,
S: CDM stability time of refined soybean oil to which no antioxidant substance is added.

3. The method according to claim 1 or 2, wherein the emulsifier is polyglycerol-condensed ricinoleic acid ester.

4. The method for producing the polyunsaturated fatty acid-containing edible vegetable fat according to any one of claims 1 to 3, comprising adding a water-soluble tea polyphenol to an aqueous medium, and adding the water-soluble tea polyphenol in a solution state to a fat, and then removing the water under reduced pressure.

5. A method for suppressing generation of aroma ingredients of a food, comprising using a highly polyunsaturated fatty acid-containing fat for distribution in a form of a liquid, wherein the highly polyunsaturated fatty acid-containing fat for distribution in a form of a liquid comprises the polyunsaturated fatty acid-containing fat comprising 1% by weight to 50% by weight of a fatty acid having five or more double bonds in a constituent fatty acid composition, wherein the highly polyunsaturated fatty acid-containing fat satisfies (A) and (B) below, and has characteristics of (C) to (E) below:
(A) a content of the water-soluble tea polyphenol is 500 to 10000 ppm by weight, a content of the emulsifier is 20000 ppm by weight or less, and the content of the emulsifier is two times or less than the content of the water-soluble tea polyphenol;
(B) a value obtained by aroma ingredient analysis of the fat after preservation at 60°C for 3 days and obtained by dividing an average area of peaks of nine aroma ingredients which are shown by (α) below and which influence a taste of the highly polyunsaturated fatty acid-containing fat by an average area of peaks of two aroma ingredients shown by (β) below is 7 or less, wherein
nine aroma ingredients (α): 2-Heptenal, 2,4-Nonadienal, 2,4-Heptadienal, 3,5-Octadien-2-one, 2-Butenal, 3,4-Pentadienal, 2,2-dimethyl, 1-Penten-3-one, 2,4-Hexadienal, 2(5H)-Furanone, 5-ethyl,
two aroma ingredients (β): Phenol and Toluene;
(C) the fat forms a continuous phase;
(D) a water content is 5% by weight or less; and
(E) A/S obtained by a method below is 0.8 or more,
A: CDM stability time at 100°C of the highly polyunsaturated fatty acid-containing fat containing the water-soluble tea polyphenol in an amount of 500 to 10000 ppm by weight
S: CDM stability time at 100°C of refined soybean oil to which no antioxidant substance is added,
wherein CDM stability time is measured as given in the method in JOCS Standard Methods for the Analysis of Fats and Oils 2.5.1.2-1996.

6. The method for suppressing generation of aroma ingredients of a food according to claim 5, wherein the highly polyunsaturated fatty acid-containing fat for distribution in a form of a liquid comprises 5% by weight to 50% by weight of the fatty acid having five or more double bonds in the constituent fatty acid composition.

7. The method for suppressing generation of aroma ingredients of a food according to claim 5 or 6, wherein the highly polyunsaturated fatty acid-containing fat for distribution in a form of a liquid meets the followings: the content of the water-soluble polyphenol is 500 to 10000 ppm by weight; the content of the emulsifier is 400 to 6000 ppm by weight; and the content of the emulsifier is two times or less than the content of the tea polyphenol.

8. The method for suppressing generation of aroma ingredients of a food according claim 5, wherein the value of (B) is obtained by using GC-TOFMS.

9. The method for suppressing generation of aroma ingredients of a food according to claim 8, wherein the water content of (D) is 2% by weight or less.

10. A method for producing a highly polyunsaturated fatty acid-containing fat for distribution in a form of a liquid, comprising adding a water-soluble tea polyphenol to an aqueous medium, and adding the water-soluble tea polyphenol in a solution state to a fat, wherein the highly polyunsaturated fatty acid-containing fat for distribution in a form of a liquid comprises the polyunsaturated fatty acid-containing fat comprising 1% by weight to 50% by weight of a fatty acid having five or more double bonds in a constituent fatty acid composition, wherein the highly polyunsaturated fatty acid-containing fat satisfies (A) and (B) below, and has characteristics of (C) to (E) below:
(A) a content of the water-soluble tea polyphenol is 500 to 10000 ppm by weight, a content of the emulsifier is 20000 ppm by weight or less, and the content of the emulsifier is two times or less than the content of the water-soluble tea polyphenol;
(B) a value obtained by aroma ingredient analysis of the fat after preservation at 60°C for 3 days and obtained by dividing an average area of peaks of nine aroma ingredients which are shown by (α) below and which influence a taste of the highly polyunsaturated fatty acid-containing fat by an average area of peaks of two aroma ingredients shown by (β) below is 7 or less, wherein
nine aroma ingredients (α): 2-Heptenal, 2,4-Nonadienal, 2,4-Heptadienal, 3,5-Octadien-2-one, 2-Butenal, 3,4-Pentadienal, 2,2-dimethyl, 1-Penten-3-one, 2,4-Hexadienal, 2(5H)-Furanone, 5-ethyl,
two aroma ingredients (β): Phenol and Toluene;
(C) the fat forms a continuous phase;
(D) a water content is 5% by weight or less; and
(E) A/S obtained by a method below is 0.8 or more,
A: CDM stability time at 100°C of the highly polyunsaturated fatty acid-containing fat containing the water-soluble tea polyphenol in an amount of 500 to 10000 ppm by weight
S: CDM stability time at 100°C of refined soybean oil to which no antioxidant substance is added,
wherein CDM stability time is measured as given in the method in JOCS Standard Methods for the Analysis of Fats and Oils 2.5.1.2-1996.

## Patentansprüche

1. Verfahren zur Herstellung eines Speisepflanzenfetts mit mehrfach ungesättigten Fettsäuren, umfassend:
Zugeben eines wasserlöslichen Tee-Polyphenols zu einem wässrigen Medium und Zugeben des wasserlöslichen Tee-Polyphenols im gelösten Zustand zu einem Fett, wobei das Speisepflanzenfett mit mehrfach ungesättigten Fettsäuren 30 Gew.-% bis 80 Gew.-% an α-Linolensäure in einer Fettsäurezusammensetzung umfasst,
wobei der Gehalt an wasserlöslichem Tee-Polyphenol 150 Gew.-ppm bis 4000 Gew.-ppm beträgt und der Gehalt an Emulgiermittel 150 Gew.-ppm bis 4000 Gew.-ppm beträgt, basierend auf dem Speisepflanzenfett mit mehrfach ungesättigten Fettsäuren, wobei der Gehalt an Emulgiermittel im Fett das 1,5-Fache oder weniger des Gehalts an wasserlöslichem Tee-Polyphenol beträgt und wobei der P/S-Wert, der durch das folgende Verfahren erhalten wird, 0,8 oder mehr beträgt,
P: CDM-Stabilitätszeit des Speisepflanzenfetts mit mehrfach ungesättigten Fettsäuren, das 150 Gew.-ppm bis 4000 Gew.-ppm des wasserlöslichen Tee-Polyphenols enthält,
S: CDM-Stabilitätszeit von raffiniertem Sojabohnenöl, dem kein Antioxidationsmittel zugegeben wird,
wobei die CDM-Stabilitätszeit gemäß dem Verfahren in JOCS Standard Methods for Analysis of Fats and Oils 2.5.1.2-1996 gemessen wird.

2. Verfahren gemäß Anspruch 1, wobei der Gehalt an wasserlöslichem Tee-Polyphenol 250 Gew.-ppm bis 2500 Gew.-ppm beträgt und der Gehalt an Emulgiermittel 250 Gew.-ppm bis 2500 Gew.-ppm beträgt, basierend auf dem Speisepflanzenfett mit mehrfach ungesättigten Fettsäuren, wobei der Gehalt an Emulgiermittel im Fett das 1,2-Fache oder weniger des Gehalts an wasserlöslichem Tee-Polyphenol beträgt und wobei der P/S-Wert, der durch das folgende Verfahren erhalten wird, 1,0 oder mehr beträgt,
P: CDM-Stabilitätszeit des Speisepflanzenfetts mit mehrfach ungesättigten Fettsäuren, das 250 Gew.-ppm bis 2000 Gew.-ppm des wasserlöslichen Tee-Polyphenols enthält,
S: CDM-Stabilitätszeit von raffiniertem Sojabohnenöl, dem kein Antioxidationsmittel zugegeben wird.

3. Verfahren gemäß Anspruch 1 oder 2, wobei das Emulgiermittel Polyglycerin-kondensierter Ricinolsäureester ist.

4. Verfahren zur Herstellung des Speisepflanzenfetts mit mehrfach ungesättigten Fettsäuren gemäß einem der Ansprüche 1 bis 3, umfassend das Zugeben eines wasserlöslichen Tee-Polyphenols zu einem wässrigen Medium und das Zugeben des wasserlöslichen Tee-Polyphenols im gelösten Zustand zu einem Fett und das anschließende Entfernen des Wassers unter vermindertem Druck.

5. Verfahren zum Unterdrücken der Bildung von Aromainhaltsstoffen eines Lebensmittels, umfassend das Verwenden eines Fetts mit hochgradig mehrfach ungesättigten Fettsäuren zum Verteilen in flüssiger Form, wobei das Fett mit hochgradig mehrfach ungesättigten Fettsäuren zum Verteilen in flüssiger Form das Fett mit hochgradig mehrfach ungesättigten Fettsäuren, umfassend 1 Gew.-% bis 50 Gew.-% einer Fettsäure mit fünf oder mehr Doppelbindungen, in einer Fettsäurezusammensetzung umfasst, wobei das Fett mit hochgradig mehrfach ungesättigten Fettsäuren die folgenden (A) und (B) erfüllt und die folgenden Eigenschaften (C) bis (E) aufweist:
(A) der Gehalt an wasserlöslichem Tee-Polyphenol beträgt 500 bis 10000 Gew.-ppm, der Gehalt an Emulgiermittel beträgt 20000 Gew.-ppm oder weniger, und der Gehalt an Emulgiermittel beträgt das Zweifache oder weniger des Gehalts an wasserlöslichem Tee-Polyphenol;
(B) ein Wert, erhalten durch Analyse der Aromainhaltsstoffe des Fetts nach Konservierung bei 60°C für 3 Tage und erhalten durch Teilen der mittleren Fläche der Peaks von neun Aromainhaltsstoffen, die unter (α) unten aufgezählt sind und die den Geschmack des Fett mit hochgradig mehrfach ungesättigten Fettsäuren beeinflussen, durch die mittlere Fläche der Peaks von zwei Aromainhaltsstoffen, die unter (β) unten aufgezählt sind, von 7 oder weniger, wobei
neun Aromainhaltsstoffe (α): 2-Heptenal, 2,4-Nonadienal, 2,4-Heptadienal, 3,5-Octadien-2-on, 2-Butenal, 3,4-Pentadienal, 2,2-Dimethyl, 1-Penten-3-on, 2,4-Hexadienal, 2 (5H)-Furanon, 5-Ethyl,
zwei Aromainhaltsstoffe (β): Phenol und Toluol;
(C) das Fett bildet eine kontinuierliche Phase;
(D) der Wassergehalt beträgt 5 Gew.-% oder weniger; und
(E) A/S, erhalten durch das folgende Verfahren, beträgt 0,8 oder mehr,
A: CDM-Stabilitätszeit bei 100°C des Fetts mit hochgradig mehrfach ungesättigten Fettsäuren, das das wasserlösliche Tee-Polyphenol in einer Menge von 500 bis 10000 Gew.-ppm enthält,
S: CDM-Stabilitätszeit bei 100°C von raffiniertem Sojabohnenöl, zu dem kein Antioxidationsmittel zugegeben wird,
wobei die CDM-Stabilitätszeit gemäß dem Verfahren in JOCS Standard Methods for Analysis of Fats and Oils 2.5.1.2-1996 gemessen wird.

6. Verfahren zum Unterdrücken der Bildung von Aromainhaltsstoffen eines Lebensmittels gemäß Anspruch 5, wobei das Fett mit hochgradig mehrfach ungesättigten Fettsäuren zum Verteilen in flüssiger Form 5 Gew.-% bis 50 Gew.-% der Fettsäure mit fünf oder mehr Doppelbindungen in der Fettsäurezusammensetzung enthält.

7. Verfahren zum Unterdrücken der Bildung von Aromainhaltsstoffen eines Lebensmittels gemäß Anspruch 5 oder 6, wobei das Fett mit hochgradig mehrfach ungesättigten Fettsäuren zum Verteilen in flüssiger Form das folgende erfüllt:
der Gehalt an wasserlöslichem Polyphenol beträgt 500 bis 10000 Gew.-ppm, der Gehalt an Emulgiermittel beträgt 400 bis 6000 Gew.-ppm und der Gehalt an Emulgiermittel beträgt das Zweifache oder weniger des Gehalts an Tee-Polyphenol.

8. Verfahren zum Unterdrücken der Bildung von Aromainhaltsstoffen eines Lebensmittels gemäß Anspruch 5, wobei der Wert (B) durch Verwendung von GC-TOFMS erhalten wird.

9. Verfahren zum Unterdrücken der Bildung von Aromainhaltsstoffen eines Lebensmittels gemäß Anspruch 8, wobei der Wassergehalt von (D) 2 Gew.-% oder weniger beträgt.

10. Verfahren zur Herstellung eines Fetts mit hochgradig mehrfach ungesättigten Fettsäuren zum Verteilen in flüssiger Form, umfassend:
Zugeben eines wasserlöslichen Tee-Polyphenols zu einem wässrigen Medium und Zugeben des wasserlöslichen Tee-Polyphenols im gelösten Zustand zu einem Fett, wobei das Fett mit hochgradig mehrfach ungesättigten Fettsäuren zum Verteilen in flüssiger Form das Fett mit hochgradig mehrfach ungesättigten Fettsäuren, umfassend 1 Gew.-% bis 50 Gew.-% einer Fettsäure mit fünf oder mehr Doppelbindungen, in einer Fettsäurezusammensetzung umfasst, wobei das Fett mit hochgradig mehrfach ungesättigten Fettsäuren die folgenden (A) und (B) erfüllt und die folgenden Eigenschaften (C) bis (E) aufweist:
(A) der Gehalt an wasserlöslichem Tee-Polyphenol beträgt 500 bis 10000 Gew.-ppm, der Gehalt an Emulgiermittel beträgt 20000 Gew.-ppm oder weniger und der Gehalt an Emulgiermittel beträgt das Zweifache oder weniger des Gehalts an wasserlöslichem Tee-Polyphenol;
(B) ein Wert, erhalten durch Analyse der Aromainhaltsstoffe des Fetts nach Konservierung bei 60°C für 3 Tage und erhalten durch Teilen der mittleren Fläche der Peaks von neun Aromainhaltsstoffen, die unter (α) unten aufgezählt sind und die den Geschmack des Fetts mit hochgradig mehrfach ungesättigten Fettsäuren beeinflussen, durch die mittlere Fläche der Peaks von zwei Aromainhaltsstoffen, die unter (β) unten aufgezählt sind, von 7 oder weniger, wobei
neun Aromainhaltsstoffe (α): 2-Heptenal, 2,4-Nonadienal, 2,4- Heptadienal, 3,5-Octadien-2-on, 2-Butenal, 3,4-Pentadienal, 2,2-Dimethyl, 1-Penten-3-on, 2,4-Hexadienal, 2 (5H)-Furanon, 5-Ethyl,
zwei Aromainhaltsstoffe (β): Phenol und Toluol;
(C) das Fett bildet eine kontinuierliche Phase;
(D) der Wassergehalt beträgt 5 Gew.-% oder weniger; und
(E) A/S, erhalten durch das folgende Verfahren, beträgt 0,8 oder mehr,
A: CDM-Stabilitätszeit bei 100°C des Fetts mit hochgradig mehrfach ungesättigten Fettsäuren, das das wasserlösliche Tee-Polyphenol in einer Menge von 500 bis 10000 Gew.-ppm enthält,
S: CDM-Stabilitätszeit bei 100°C von raffiniertem Sojabohnenöl, zu dem kein Antioxidationsmittel zugegeben wird,
wobei die CDM-Stabilitätszeit gemäß dem Verfahren in JOCS Standard Methods for Analysis of Fats and Oils 2.5.1.2-1996 gemessen wird.

## Revendications

1. Procédé pour produire une graisse végétale comestible contenant des acides gras polyinsaturés, comprenant l'addition d'un polyphénol de thé soluble dans l'eau à un milieu aqueux, et l'addition du polyphénol de thé soluble dans l'eau à l'état de solution à une graisse, dans lequel la graisse végétale comestible contenant des acides gras polyinsaturés comprend de 30 % en poids à 80 % en poids d'acide α-linolénique dans la composition d'acides gras constitutifs, dans lequel la teneur en polyphénol de thé soluble dans l'eau est de 150 ppm en poids à 4 000 ppm en poids et la teneur en un émulsionnant est de 150 ppm en poids à 4 000 ppm en poids par rapport à la graisse végétale comestible contenant des acides gras polyinsaturés, dans lequel la teneur en l'émulsionnant de la graisse est de 1,5 fois ou moins la teneur en le polyphénol de thé soluble dans l'eau, et dans lequel la valeur P/S, obtenue par le procédé ci-dessous, est de 0,8 ou plus,
P : temps de stabilité CDM (obtenu par le procédé de détermination conductométrique) de la graisse végétale comestible contenant des acides gras polyinsaturés contenant de 150 ppm en poids à 4 000 ppm en poids du polyphénol de thé soluble dans l'eau,
S : temps de stabilité CDM de l'huile de soja raffinée à laquelle aucune substance antioxydante n'a été ajoutée,
où le temps de stabilité CDM est mesuré comme indiqué dans le procédé des Méthodes pour l'Analyse des Graisses et Huiles de la Norme JOCS 2.5.1.2-1996.

2. Procédé selon la revendication 1, dans lequel la teneur en le polyphénol de thé soluble dans l'eau est de 250 ppm en poids à 2 500 ppm en poids et la teneur en l'émulsionnant est de 250 ppm en poids à 2 500 ppm en poids par rapport à la graisse végétale comestible contenant des acides gras polyinsaturés, dans lequel la teneur en l'émulsionnant de la graisse est de 1,2 fois ou moins la teneur en le polyphénol de thé soluble dans l'eau, et dans lequel la valeur P/S obtenue par le procédé ci-dessous est de 1,0 ou plus,
P : temps de stabilité CDM de la graisse végétale comestible contenant des acides gras polyinsaturés contenant de 250 ppm en poids à 2 000 ppm en poids du polyphénol de thé soluble dans l'eau,
S : temps de stabilité CDM de l'huile de soja raffinée à laquelle aucune substance antioxydante n'a été ajoutée.

3. Procédé selon la revendication 1 ou 2, dans lequel l'émulsionnant est un ester d'acide ricinoléique condensé avec du polyglycérol.

4. Procédé pour produire une graisse végétale comestible contenant des acides gras polyinsaturés selon l'une quelconque des revendications 1 à 3, comprenant l'addition d'un polyphénol de thé soluble dans l'eau à un milieu aqueux, et l'addition du polyphénol de thé soluble dans l'eau en solution à une graisse, et ensuite l'élimination de l'eau sous pression réduite.

5. Procédé pour supprimer la génération d'ingrédients aromatiques d'un aliment, comprenant l'utilisation d'une graisse contenant des acides gras fortement polyinsaturés pour une distribution sous la forme d'un liquide, dans lequel la graisse contenant des acides gras fortement polyinsaturés pour une distribution sous la forme d'un liquide comprend la graisse contenant des acides gras polyinsaturés comprenant de 1 % en poids à 50 % en poids d'un acide gras ayant cinq ou plus de cinq doubles liaisons dans la composition d'acides gras constitutifs, dans lequel la graisse contenant des acides gras fortement polyinsaturés satisfait à (A) et (B) ci-dessous, et a les caractéristiques de (C) à (E) ci-dessous :
(A) la teneur en le polyphénol de thé soluble dans l'eau est de 500 à 10 000 ppm en poids, la teneur en l'émulsionnant est de 20 000 ppm en poids ou moins, et la teneur en l'émulsionnant est de deux fois ou moins la teneur en le polyphénol de thé soluble dans l'eau ;
(B) la valeur obtenue par analyse des ingrédients aromatiques de la graisse après conservation à 60°C pendant 3 jours et obtenue par division de la superficie moyenne des pics de neuf ingrédients aromatiques qui sont indiqués par (α) ci-dessous et qui influencent le goût de la graisse contenant des acides gras fortement polyinsaturés, par la superficie moyenne de pics de deux ingrédients aromatiques indiqués par (β) ci-dessous, est de 7 ou moins, où
les neuf ingrédients aromatiques (α) : 2-hepténal, 2,4-nonadiénal, 2,4-heptadiénal, 3,5-octadién-2-one, 2-buténal, 3,4-pentadiénal, 2,2-diméthyle, 1-pentén-3-one, 2,4-hexadiénal, 2(5H)-furanone, 5-éthyle,
les deux ingrédients aromatiques (β) : phénol et toluène ;
(C) la graisse forme une phase continue ;
(D) la teneur en eau est de 5 % en poids ou moins ; et
(E) Le rapport A/S obtenu par le procédé ci-dessous est de 0,8 ou plus,
A : temps de stabilité CDM à 100°C de la graisse contenant des acides gras fortement polyinsaturés contenant le polyphénol de thé soluble dans l'eau en une quantité de 500 à 10 000 ppm en poids,
S : temps de stabilité CDM à 100°C de l'huile de soja raffinée à laquelle aucune substance antioxydante n'a été ajoutée,
où le temps de stabilité CDM est mesuré comme indiqué dans le procédé des Méthodes pour l'Analyse des Graisses et Huiles de la Norme JOCS 2.5.1.2-1996.

6. Procédé pour supprimer la génération d'ingrédients aromatiques d'un aliment selon la revendication 5, dans lequel la graisse contenant des acides gras fortement polyinsaturés pour une distribution sous la forme d'un liquide comprend de 5 % en poids à 50 % en poids de l'acide gras ayant cinq ou plus de cinq doubles liaisons dans la composition d'acides gras constitutifs.

7. Procédé pour supprimer la génération d'ingrédients aromatiques d'un aliment selon la revendication 5 ou 6, dans lequel la graisse contenant des acides gras fortement polyinsaturés pour une distribution sous la forme d'un liquide satisfait à ce qui suit : la teneur en le polyphénol soluble dans l'eau est de 500 à 10 000 ppm en poids ; la teneur en l'émulsionnant est de 400 à 6 000 ppm en poids ; et la teneur en l'émulsionnant est de deux fois ou moins la teneur en le polyphénol de thé.

8. Procédé pour supprimer la génération d'ingrédients aromatiques d'un aliment selon la revendication 5, dans lequel la valeur de (B) est obtenue par utilisation d'une GC-TOFMS.

9. Procédé pour supprimer la génération d'ingrédients aromatiques d'un aliment selon la revendication 8, dans lequel la teneur en eau de (D) est de 2 % en poids ou moins.

10. Procédé pour produire une graisse contenant des acides gras fortement polyinsaturés pour une distribution sous la forme d'un liquide, comprenant l'addition d'un polyphénol de thé soluble dans l'eau à un milieu aqueux, et l'addition du polyphénol de thé soluble dans l'eau à l'état de solution à une graisse, dans lequel la graisse contenant des acides gras fortement polyinsaturés pour une distribution sous la forme d'un liquide comprend la graisse contenant des acides gras polyinsaturés comprenant de 1 % en poids à 50 % en poids d'un acide gras ayant cinq ou plus de cinq doubles liaisons dans la composition d'acides gras constitutifs, dans lequel la graisse contenant des acides gras fortement polyinsaturés satisfait à (A) et (B) ci-dessous, et a les caractéristiques de (C) à (E) ci-dessous :
(A) la teneur en le polyphénol de thé soluble dans l'eau est de 500 à 10 000 ppm en poids, la teneur en l'émulsionnant est de 20 000 ppm en poids ou moins, et la teneur en l'émulsionnant est de deux fois ou moins la teneur en le polyphénol de thé soluble dans l'eau ;
(B) la valeur obtenue par analyse des ingrédients aromatiques de la graisse après conservation à 60°C pendant 3 jours et obtenue par division de la superficie moyenne des pics de neuf ingrédients aromatiques qui sont indiqués par (α) ci-dessous et qui influencent le goût de la graisse contenant des acides gras fortement polyinsaturés, par la superficie moyenne de pics de deux ingrédients aromatiques indiqués par (β) ci-dessous, est de 7 ou moins, où
les neuf ingrédients aromatiques (α) : 2-hepténal, 2,4-nonadiénal, 2,4-heptadiénal, 3,5-octadién-2-one, 2-buténal, 3,4-pentadiénal, 2,2-diméthyle, 1-pentén-3-one, 2,4-hexadiénal, 2(5H)-furanone, 5-éthyle,
les deux ingrédients aromatiques (β) : phénol et toluène ;
(C) la graisse forme une phase continue ;
(D) la teneur en eau est de 5 % en poids ou moins ; et
(E) Le rapport A/S obtenu par le procédé ci-dessous est de 0,8 ou plus,
A : temps de stabilité CDM à 100°C de la graisse contenant des acides gras fortement polyinsaturés contenant le polyphénol de thé soluble dans l'eau en une quantité de 500 à 10 000 ppm en poids,
S : temps de stabilité CDM à 100°C de l'huile de soja raffinée à laquelle aucune substance antioxydante n'a été ajoutée,
où le temps de stabilité CDM est mesuré comme indiqué dans le procédé des Méthodes pour l'Analyse des Graisses et Huiles de la Norme JOCS 2.5.1.2-1996.
